# EUROPÄISCHE PATENTSCHRIFT

(11) **EP 2 668 693 B1**
(45) Veröffentlichungstag und Bekanntmachung des Hinweises auf die Patenterteilung: **21.01.2015**
(21) Anmeldenummer: 11793664.1
(22) Anmeldetag: 01.12.2011
(51) Int. Cl.: H01Q 1/24, H01Q 3/00, H01Q 3/32, F16H 37/06

(54) **MOBILFUNKANTENNE MIT MULTI-STRAHLFORMEINRICHTUNG**
MOBILE RADIO ANTENNA COMPRISING A MULTI BEAM FORMING DEVICE
ANTENNE DE RADIOTÉLÉPHONIE MOBILE À DISPOSITIF DE MISE EN FORME DE FAISCEAUX MULTIPLES

(30) Priorität: 27.01.2011 DE 102011009600
(43) Veröffentlichungstag der Anmeldung: 04.12.2013
(73) Patentinhaber: Kathrein-Werke KG, 83022 Rosenheim (DE)
(72) Erfinder: HÄNTSCH, Ralf, 83064 Raubling (DE); BERGER, Stefan, 83101 Thansau - Rohrdorf (DE)
(74) Vertreter: Flach, Dieter Rolf Paul
(86) Internationale Anmeldenummer: PCT/EP2011/006033
(87) Internationale Veröffentlichungsnummer: WO 2012/100796

(56) Entgegenhaltungen:
- WO-A2-2009/102774
- US-A- 3 686 974
- US-A- 4 334 439
- US-A1- 2003 177 862

## Beschreibung

Die Erfindung betrifft eine Mobilfunkantenne mit einer Multi-Strahlformeinrichtung mittels der zumindest zwei in der Mobilfunkantenne angeordnete Phasenschieber betätigt werden können.

Strahlformeinrichtungen werden insbesondere in der Mobilfunktechnik eingesetzt, d.h. bei Mobilfunkbasisstationen, um die Hauptquelle einer Mobilfunkantenne bezüglich ihres Abstrahlwinkels unterschiedlich einzustellen. In Abhängigkeit des Absenkwinkels (der üblicherweise auch "down tilt" genannt wird) kann eine betreffende Mobilfunkzelle unterschiedlich groß ausgeleuchtet und damit eingestellt werden.

Derartige Strahlformeinrichtungen werden üblicherweise als RET-Einheit bezeichnet, d.h. diese werden als eine sogenannte "remote electrical tilt"-Einrichtung bezeichnet, wie sie beispielsweise aus der WO 02/061877 A2 bekannt ist. Mittels einer Strahlformeinrichtung kann aber nicht nur beispielweise durch unterschiedliche Einstellungen von Phasenschiebern ein unterschiedlicher down-tilt-Winkel in Elevationsrichtung eingestellt werden, sondern es kann auch insbesondere bei einem Antennenarray mit mehreren Spalten beispielsweise unter Verwendung von Phasenschiebern die Hauptstrahlrichtung und damit die Hauptquelle einer Antennenanlage in Horizontalrichtung, also mit unterschiedlichem Azimutwinkel eingestellt werden. Schließlich kann mittels einer Strahlformeinrichtung nicht nur eine unterschiedliche Ausrichtung der Hauptstrahlrichtung einer Antennenanlage in Elevationsrichtung und/oder in Azimutrichtung eingestellt werden, sondern es kann auch die Strahlbreite sowohl in Azimut- wie in Elevationsrichtung unterschiedlich eingestellt werden, um also hier die Halbwertsbreite einer Hauptstrahlkeule unterschiedlich einstellen zu können (half power beam width). Ebenso ist es auch möglich, Einstellungen für die mechanischen Winkel einer Antenne, nämlich Roll, Nick und Gier ("roll", "pitch", "yaw"), vorzunehmen.

Mit anderen Worten sind die vorbekannten Antennen in der Regel so ausgeführt, dass an einer dafür vorgesehenen mechanischen Schnittstelle (beispielsweise am unteren Montageflansch des Antennengehäuses) die sogenannte RET-Einheit installiert werden kann, die neben einer Elektronik auch einen Motor umfasst, welcher über eine mechanische Umsetzung die in der Antenne integrierten Phasenschieber ansteuert. Die somit erreichte Phasenänderung wirkt sich direkt auf die Strahlcharakteristik, d.h. auf den Down-Tilt-Winkel der Antenne aus.

Mittels derartiger RET-Einheiten kann grundsätzlich die Strahlcharakteristik von Multi-Antennenanlagen unterschiedlich eingestellt werden, wobei die erwähnten RET-Motoren zur Einstellung der Hauptstrahlrichtung der Antenne nicht nur in Vertikalrichtung (also in Elevationsrichtung zur Einstellung eines unterschiedlichen Down-Tilt-Winkels), sondern auch in Horizontalrichtung (also in Azimutrichtung) wie aber auch zur Einstellung der Halbwertsbreite einer Hauptkeule verwendet werden können.

Bedingt durch Site-Sharing-Szenarien (bei welcher sich Netzbetreiber einen Standort teilen) sowie bei sogenannten Co-Siting-Szenarien (bei denen ein Netzbetreiber an einem Standort mehrere Basisstationen gegebenenfalls unterschiedlicher Mobilfunkgenerationen bzw. Mobilfunktechnologien betreibt) wird zunehmend eine höhere Anzahl von Antennen je Standort installiert. Spätestens seit Einführung von UMTS wird eine Großzahl der installierten Antennen durch ein System ergänzt, welche es letztendlich ermöglicht, die Strahlcharakteristik der Antennen elektrisch zu steuern. Dabei handelt es sich um die vorstehend beschriebene RET-Konfiguration, mit der ein Absenkwinkel ferngesteuert unterschiedlich einstellbar ist.

Aus der WO 2009/102774 A2 ist beispielsweise eine Multi-Strahlformeinrichtung in Form einer Multi-RET-Einrichtung bekannt, die über drei manuell betätigbare Einstellachsen verfügt, um darüber beispielsweise drei getrennte Antennenarrays ansteuern zu können. Zur Vereinfachung des gesamten Aufbaus wird vorgeschlagen, eine gemeinsame Steuerungseinrichtung für alle drei Strahlformeinrichtungen zu verwenden. Der Gleichstrommotor ist dabei lediglich mit einer Einstellachse in Wirkverbindung bringbar.

Ferner ist aus der WO 2009/102774 A2 ebenfalls eine Multi-Strahlformeinrichtung bekannt geworden, die entsprechende Eingangs- und Ausgangsachsen zur Ansteuerung der Antenneneinrichtung aufweist. Hier ist eine Möglichkeit vorgeschlagen worden, den Gleichstrommotor der Antriebseinrichtung von dem Phasenschieber-Einstellschaft abzukoppeln, um auf leichtere Weise die Phasenschieber-Steuerungsknöpfe manuell bedienen zu können.

Aus der US 2003/0177862 A1 ist ein automatisches System zum Umlenken einer Motorausgabe in Form einer Antriebsleistung bzw. eines Antriebsmoments bekannt. Die Motorausgabe wird an ein Antriebszahnrad übertragen, das mittels einer Umschalteinrichtung mit Planetenausgabezahnrädern und mit diesen drehfest verbundenen Planetenausgabeabtrieben in Wirkverbindung bringbar ist. Die Umschalteinrichtung ist dabei so ausgestaltet, dass bei Drehung die Antriebswelle des Antriebmotors entgegen des Uhrzeigersinns das Antriebszahnrad mit keinem der Planetenausgabeabtriebe in Wirkverbindung bringbar ist. Wenn hingegen die Antriebswelle des Antriebsmotors im Uhrzeigersinn dreht, dann ist die Antriebswelle mit unterschiedlichen der Planetenausgabeabtriebe in Wirkverbindung bringbar. Folglich sind die Planetenausgabeabtriebe lediglich bei einer Drehung der Motorantriebswelle im Uhrzeigersinn mittels des Antriebmotors antreibbar.

Die US 4,334,439 offenbart eine Kraftübertragungsvorrichtung für eine Vielzahl von Werkzeugen, wobei die Kraftübertragungsvorrichtung ein antreibbares Antriebsglied mit einer Antriebswelle und eine Vielzahl von Abtrieben umfasst, die jeweils eine zur Antriebswelle im Wesentlichen parallele Abtriebswelle bis und jeweils ein mit der Abtriebswelle drehfest verbundenes Abtriebsrad umfassen. Ferner umfasst die Vorrichtung eine der Anzahl der Abtriebe entsprechende Anzahl von Antriebsverbindungen. Dabei ist die Vorrichtung dazu ausgebildet, dass das mit dem Antriebsglied in Wirkverbindung stehende Abtriebsrad durch Antreiben des Antriebsglieds stets angetrieben wird, wobei eine Drehrichtungsumkehrung des Antriebsglieds eine Drehrichtungsumkehrung des mit diesem wirkverbundenen Abtriebsrads bewirkt. Ferner umfasst die Vorrichtung eine der Anzahl der Abtriebe entsprechende Anzahl von Kopplungseinheiten mittels denen eine mit der Kopplungseinheit verbundenes Abtriebsrad in seiner axialen Position derart veränderbar ist, dass das Abtriebsrad mit dem Antriebsrad in Wirkverbindung und aus Wirkverbindung verschiebbar ist.

Dem Stand der Technik ist gemein, dass bei den Multi-Band-Antennen jedes Band mit einem "Single-RET-Aktuator" bestückt ist. Somit ist zur Ansteuerung einer Antenne in einem Antennenarray für jede Antenne eine Eingangs- bzw. Antriebsachse notwendig.

Vor diesem Hintergrund ist es Aufgabe der vorliegenden Erfindung eine verbesserte Lösung für eine Mobilfunkantenne mit einer Multi-Strahlformeinrichtung zu schaffen, bei der die Strahlcharakteristiken bei einer in zumindest zwei Bändern strahlenden Antenne bzw. bei mehreren Antennen je Standort gegenüber herkömmlichen Lösungen auf verbesserte und insbesondere vereinfachte Weise unterschiedlich einstellt werden können. Dabei soll möglichst wenig Platz an der Antennenstirnseite verwendet werden, da die Antennenstirnseite bereits mit einer Vielzahl von beispielsweise Koaxialsteckern bestückt ist.

Die Aufgabe wird erfindungsgemäß entsprechend den in Anspruch 1 angegebenen Merkmalen gelöst. Vorteilhafte Ausgestaltungen der Erfindung sind in den Unteransprüchen wiedergegeben.

Im Rahmen der Erfindung wird eine gegenüber dem Stand der Technik sehr viel vorteilhaftere Lösung einer Mobilfunkantenne mit einer Multi-Strahlformeinrichtung vorgeschlagen, bei der beispielsweise an der Stirnseite der Mobilfunkantenne lediglich ein Antriebsglied und eventuell ein Verstellantriebsglied vorgesehen sind. Bei Ausgestaltung der erfindungsgemäßen Mobilfunkantenne mit einer Multi-Strahlformeinrichtung, die einen Elektromotor umfasst, kann an der Antennenstirnseite lediglich eine Antriebsschnittstelle und eine Umschaltschnittstelle vorgesehen sein.

Erfindungsgemäß ist vorgesehen, dass eine Mobilfunkantenne eine Multi-Strahlformeinrichtung umfasst, wobei die Multi-Strahlformeinrichtung ein antreibbares Antriebsglied mit einer Antriebswelle umfasst. Darüber hinaus umfasst die Multi-Strahlformeinrichtung zumindest zwei Abtriebe, die jeweils eine zur Antriebswelle im wesentlichen parallele Abtriebswelle und jeweils ein mit der Abtriebswelle drehfest verbundenes Abtriebsrad umfassen. Zumindest zwei Phasenschieber, die in der Mobilfunkantenne angeordnet sind, stehen jeweils mit einem der Abtriebe über jeweils eine Antriebsverbindung in Wirkverbindung. Die Multi-Strahlformeinrichtung umfasst ferner eine Umschalteinrichtung, mittels der das Antriebsglied selektiv mit einem der Abtriebsräder in Wirkverbindung bringbar ist.

Eine entsprechende Multi-Strahlformeinrichtung baut sehr kompakt, da lediglich nur noch ein Antrieb notwendig ist, um die zumindest zwei Abtriebe zu betätigen. Aufgrund der kompakten Ausmaße der Multi-Strahlformeinrichtung kann diese gut an einer Antennenstirnseite der Mobilfunkantenne eingebaut werden. Weiterhin ist die Multi-Strahlformeinrichtung von außen auch manuell bzw. mechanisch betätigbar, wodurch die Multi-Strahlformeinrichtung eine geringere Fehler- und Ausfallanfälligkeit aufweist.

Bevorzugt weist dabei die Umschalteinrichtung ein Umschaltrad auf, das mit dem Antriebsrad und der Antriebswelle drehfest verbunden und auf der Antriebswelle verschiebbar ist. Das Umschaltrad ist dabei mittels der Umschalteinrichtung auf der Antriebswelle translatorisch verschiebbar, so dass das Antriebsglied mit zumindest einem der beiden Abtriebsräder in Wirkverbindung bringbar ist.

Dabei wird die drehfeste, aber verschiebbare Verbindung zwischen dem Umschaltrad und der Antriebswelle dadurch erreicht, dass die Antriebswelle in dem dem Antriebsglied entfernten Bereich eine nicht kreissymmetrische Querschnittsform aufweist, und das Umschaltrad mittig eine Umschaltradöffnung aufweist, die der Querschnittsform der Antriebswelle entspricht. Dadurch wird gewährleistet, dass das Umschaltrad mit der Antriebswelle fest verbunden ist, aber entlang der Längsausdehnung der Antriebswelle verschiebbar ist.

Eine entsprechend ausgestaltete Strahlformeinrichtung weist einen kleinen Durchmesser auf, so dass diese einen geringen Platzverbrauch an einer Antennenstirnseite einer Mobilfunkantenne aufweist. Weiterhin können mittels der erfindungsgemäßen Multi-Strahlformeinrichtung auch mehrere Abtriebswellen und somit mehrere Phasenschieber gleichzeitig angesteuert werden, wenn das Umschaltrad eine entsprechende Dicke aufweist, so dass das Umschaltrad mit mehreren Abtriebsrädern gleichzeitig in Wirkverbindung gebracht werden kann.

In einer weiteren Ausführungsform der vorliegenden Erfindung sind die Abtriebswellen in stirnseitiger Projektion auf einem Kreisabschnitt um die Antriebswelle als Kreiszentrum angeordnet. Die Abtriebswellen und die Abtriebsräder sind somit spiralartig um die Antriebswelle herum angeordnet. Zumindest zwei der Abtriebe umfassen ferner jeweils mindestens ein zweites Rad, das drehfest mit der jeweiligen Abtriebswelle so verbunden ist, dass zumindest zwei der zweiten Räder in einer oder mehreren Ebenen angeordnet sind, so dass das Umschaltrad mit zumindest zwei der zweiten Räder simultan in Wirkverbindung gebracht werden kann.

Eine entsprechende Ausgestaltung der Mobilfunkantenne baut besonders kompakt, da die Abtriebswellen und Abtriebsräder spiralartig um die Antriebswelle herum angeordnet sind. Weiterhin ermöglicht eine entsprechende Ausgestaltung der Mobilfunkantenne eine sogenannte "Zentralverriegelung" der Abtriebswellen, da das Umschaltrad eine Stellung einnehmen kann, bei der das Umschaltrad mit allen Abtriebsrädern in Wirkverbindung steht. Aufgrund der Wirkverbindung des Umschaltrads mit allen Abtriebsrädern sind die jeweiligen Abtriebsräder auch miteinander in Wirkverbindung bringbar, was zu einer gegenseitigen Stabilisierung der einzelnen Abtriebswellen führt. Wenn andererseits beispielsweise ein Elektromotor zum Antreiben des Antriebsglieds verwendet wird, kann durch eine Wirkverbindung des Umschaltrads mit allen Abtriebsrädern zur gleichen Zeit aufgrund des Haltemoments des Elektromotors ein Verdrehen der jeweiligen Abtriebswellen vermieden werden. Die zweiten Räder können auch in mehreren Ebenen angeordnet sein. D.h. dass zumindest zwei zweite Räder eine senkrecht zu den Abtriebswellen orientierte Ebene definieren. Das Antriebsglied kann mit den in einer gemeinsamen Ebene angeordneten zweiten Rädern in Wirkverbindung gebracht werden, so dass beliebige Kombinationen von Phasenschiebern gleichzeitig verstellbar sind.

Bevorzugt sind die oben beschriebenen Antriebsglieder und/ oder das Umschaltrad und die Abtriebsräder als Zahnräder ausgestaltet, wobei die einzelnen Zähne des Antriebsglieds und/oder des Umschaltrads und der Abtriebsräder beidseitig Fasen aufweisen. Durch eine entsprechende Ausgestaltung der Zahnräder wird ein einfaches ineinandergreifen der Zahnräder gewährleistet, wodurch ein Verhaken der einzelnen Räder untereinander vermieden wird.

Vorzugsweise weisen die einzelnen Zahnstirnseiten der Zähne des Umschaltrads und der Abtriebsräder ferner beidseitig Fasen auf. Durch einen entsprechende Ausgestaltung der einzelnen Zahnstirnseiten wird gewährleistet, dass bei Verschieben des Umschaltrads das Umschaltrad und das betreffende Abtriebsrad sich so zueinander ausrichten, dass das Umschaltrad und das Abtriebsrad miteinander zuverlässig kämmen.

In einer weiteren bevorzugten Ausführungsform umfasst die Umschalteinrichtung ein Umschaltrad, das mit dem Antriebsglied in Wirkverbindung ist und das mittels der Umschalteinrichtung bewegt werden kann. Durch die Bewegung des Umschaltrades kann das Antriebsglied über das Umschaltrad mit einem der zumindest zwei Abtriebsräder in Wirkverbindung gebracht werden.

Dabei kann das Antriebsglied beispielsweise lediglich die Antriebswelle umfassen. Das Umschaltrad ist dann mit der Antriebswelle drehfest verbunden. Das Umschaltrad kann beispielsweise bei einer linearen Anordnung der einzelnen Abtriebe linear bewegt, also verschoben werden, so dass das Umschaltrad mit einem der auf einer geraden Linie angeordneten Abtriebsräder in Wirkverbindung gebracht werden kann. Das Umschaltrad kann aber andererseits auch radial um ein Schwenkzentrum verschwenkt werden, wenn die einzelnen Abtriebswellen und die auf den Abtriebswellen angeordneten Abtriebsräder auf einem Kreisabschnitt angeordnet sind, wobei das Schwenkzentrum, um das das Umschaltrad schwenkt, das Kreiszentrum des Kreisabschnitts ist, auf dem die jeweiligen Abtriebswellen angeordnet sind. In diesem Fall ist das Umschaltrad ein Planetenrad.

Eine entsprechende Ausführungsform der erfindungsgemäßen Mobilfunkantenne baut besonders flach und ist darüber hinaus besonders geeignet für eine translatorische Kraftübertragung, wenn also für die Antriebsverbindungen beispielsweise Schubstangen bzw. Bowdenzüge verwendet werden.

Bevorzugt kann die Multi-Strahlformeinrichtung ferner einen Elektromotor umfassen, der dazu ausgebildet ist, das Antriebsglied und/oder ein Verstellantriebsglied anzutreiben. Ferner umfasst die Multi-Strahlformeinrichtung vorzugsweise eine Kupplung, die dazu ausgebildet ist, dass der Motor mit dem Antriebsglied oder mit dem Verstellantriebsglied in Wirkverbindung steht.

Durch eine entsprechende Ausgestaltung der Mobilfunkantenne ist für den Antrieb bzw. für die Umschaltung der Multi-Strahlformeinrichtung lediglich ein Elektromotor notwendig.

Ebenso kann die Multi-Strahlformeinrichtung unter Einsparen der Kupplung zwei Aktuatoren umfassen, nämlich einen zum Bewegen der Antriebsschnittstelle und einen zum Bewegen der Umschaltschnittstelle.

Die Erfindung wird nachfolgend anhand der Zeichnungen näher erläutert. Dabei zeigen im einzelnen:
- Figur 1:: eine schematische Querschnittsdarstellung einer erfindungsgemäßen Mobilfunkantenne;
- Figur 2:: eine perspektivische Darstellung eines Teils einer Multi-Strahlformeinrichtung gemäß der ersten Ausführungsform der vorliegenden Erfindung;
- Figur 3:: eine Seitenansicht des in Figur 2 dargestellten Teils der Multi-Strahlformeinrichtung ohne Gehäuse;
- Figur 4:: eine Stirnansicht des Teils der in den Figuren 2 und 3 dargestellten Multi-Strahlformeinrichtung ohne Gehäuse;
- Figur 5:: eine perspektivische Darstellung einer Antriebswelle;
- Figuren 6a:: eine perspektivische Darstellungen eines
- bis 6b :: Umschaltrads;
- Figur 7:: eine perspektivische Darstellung eines Schiebers;
- Figur 8:: eine perspektivische Darstellung des Antriebsstrangs und des Umschaltstrangs der Multi-Strahlformeinrichtung;
- Figur 9:: eine perspektivische Darstellung eines Teils einer Multi-Strahlformeinrichtung gemäß der ersten Ausführungsform mit zwei Abtrieben;
- Figur 10:: eine perspektivische Darstellung eines Teils einer Multi-Strahlformeinrichtung mit vier Abtrieben;
- Figuren 11a, 11b, 11c:: eine Stirnansicht, eine Seitenansicht und eine perspektivische Darstellung eines Zahnrads;
- Figur 12:: eine Abwandlung eines Teils der Multi-Strahlformeinrichtung gemäß der ersten Ausführungsform mit einer sogenannten "Zentralverriegelungsanordnung";
- Figuren 13a, 13b, 13c:: eine Seitenansicht, eine frontseitige Stirnansicht und eine rückseitige Stirnansicht ohne Gehäuse des in Figur 12 dargestellten Teils der Multi-Strahlformeinrichtung mit der sogenannten Zentralverriegelungsanordnung;
- Figuren 14a: eine perspektivische Darstellung eines
- bis 14d:: Teils einer Multi-Strahlformeinrichtung gemäß einer weiteren Ausführungsform der vorliegenden Erfindung mit aktivierter Arretiereinrichtung und deaktivierter Arretiereinrichtung;
- Figur 15:: eine perspektivische Darstellung eines Teils des Antennengehäuses bzw. eines Teils eines Gehäuses, in dem ein Teil der Multi-Strahlformeinrichtung gemäß der zweiten Ausführungsform der vorliegenden Erfindung einbringbar ist;
- Figur 16:: eine perspektivische Darstellung des in Figur 15 gezeigten Gehäuseteils mit einer Schwenkeinrichtung; und
- Figur 17:: eine Darstellung einer abgewandelten Ausführung gegenüber der in den Figuren 14a bis 14d sowie 15 und 16 gezeigten Variante der Erfindung, wobei die Schwenkeinrichtung direkt angetrieben wird.

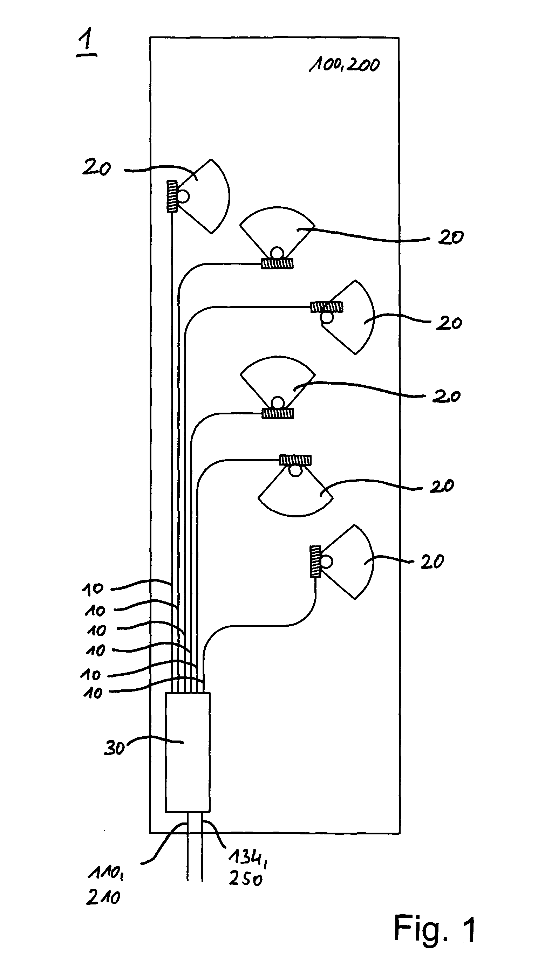

Figur 1 ist eine schematische Querschnittsdarstellung einer erfindungsgemäßen Mobilfunkantenne 1, die mit einer Multi-Strahlformeinrichtung 100, 200 ausgestattet ist. Im unteren Randbereich der Mobilfunkantenne 1 ist eine Gehäuse 30 angeordnet, das ein Antriebsglied 110, 210 und ein Verstellantriebsglied 134 bzw. einen Verriegelungsbolzen 250 umfasst. Das Antriebsglied 110, 210 und das Verstellantriebsglied 134 bzw. der Verriegelungsbolzen 250 sind von außerhalb der Mobilfunkantenne 1 betätigbar. Das Innenleben des Gehäuses 30 wird weiter unten detailliert beschrieben.

Anstelle des Antriebsglieds 110, 210 und des Verstellantriebsglieds 134 bzw. des Verriegelungsbolzens 250 kann alternativ auch eine Antriebsschnittstelle und eine Umschaltschnittstelle an dem Gehäuse 30 vorgesehen sein, wenn die Mobilfunkantenne 1 mit einem Elektromotor ausgestattet ist, der zum Betätigen bzw. zum Antreiben des Antriebsglieds 110, 210 und/oder des Verstellantriebsglieds 134 bzw. des Verriegelungsbolzens 250 ausgebildet ist.

Aus dem Gehäuse 30 ragen Abtriebsschnittstellen 124 heraus, die in Figur 1 nicht dargestellt sind. Mit diesen Abtriebsschnittstellen 124 sind in dem in Figur 1 dargestellten Beispiel einer Mobilfunkantenne 1 sechs Antriebsverbindungen 10 wirkverbunden. Die sechs Antriebsverbindungen 10 sind an deren jeweiligen gegenüberliegenden Enden mit sechs Phasenschiebern 20 verbunden. Die jeweiligen Phasenschieber 20 können dabei - wie dargestellt - jeweils ein Stellglied bzw. ein Betätigungselement beispielsweise in Form eines Schnecke umfassen. Darüber hinaus können die jeweiligen Phasenschieber 20, wie dargestellt, Übertragungs- und/oder Einstelleinrichtungen in Form eines Zahnrads umfassen.

Die jeweiligen Antriebsverbindungen 10 bestehen bevorzugt aus einer flexiblen Achse oder aus einer flexiblen Welle, können aber auch so konzipiert und gestaltet sein, dass die jeweilige flexible Achse 10 oder flexible Welle 10 aus starren Wellen- und Achsabschnitten besteht und jeweils mit elastischen oder flexiblen Achs- oder Wellenzwischenabschnitten, Kreuzgelenken etc. ergänzt sind, um eine Verbindung von der Abtriebsschnittstelle 124 bis zu Anschlussschnittstellen der Phasenschieber 20 zu gewährleisten. Auch eine nur aus starren Wellenabschnitten bestehende Realisierung der Antriebsverbindung ist möglich, wenn für notwendige Richtungsänderungen der Kraft- bzw. Momentübertragung Getriebestufen, z.B. Kegelradgetriebe, Zwischengetriebe vorgesehen sind. Die Antriebsverbindungen 10 können aber auch eine Art Bowdenzug-Anordnung 10 sein, bei der in einer schlauchförmigen Ummantelung ein Seilzug beispielsweise gegen die Kraft einer Federeinrichtung längsverschieblich geführt ist.

Das Gehäuse 30 kann in der Mobilfunkantenne 1 auch weiter oben als im Ausführungsbeispiel dargestellt, im mittleren oder sogar im oberen Bereich der Antenne 1 vorgesehen sein. Fügt man gleichzeitig zwischen dem Gehäuse 30 sowie dem Antriebsglied 110, 210 und dem Verstellantriebsglied 134, 250 entsprechend lange Wellenabschnitte ein, bleiben diese Schnittstellen von der Unterseite der Antenne 1 her zugänglich. Dabei ist es möglich, dass einige oder alle Antriebsverbindungen 10 abweichend zu Figur 1 an anderen Seiten des Gehäuses 30, z.B. an der Unterseite, angeordnet sind.

Die in Figur 1 dargestellte Mobilfunkantenne 1 umfasst lediglich ein Antriebsglied 110, 210 und ein Verstellantriebsglied 134 bzw. einen Verriegelungsbolzen 250, mittels denen in dem in Figur 1 dargestellten Beispiel sechs Phasenschieber 20 betätigt werden können.

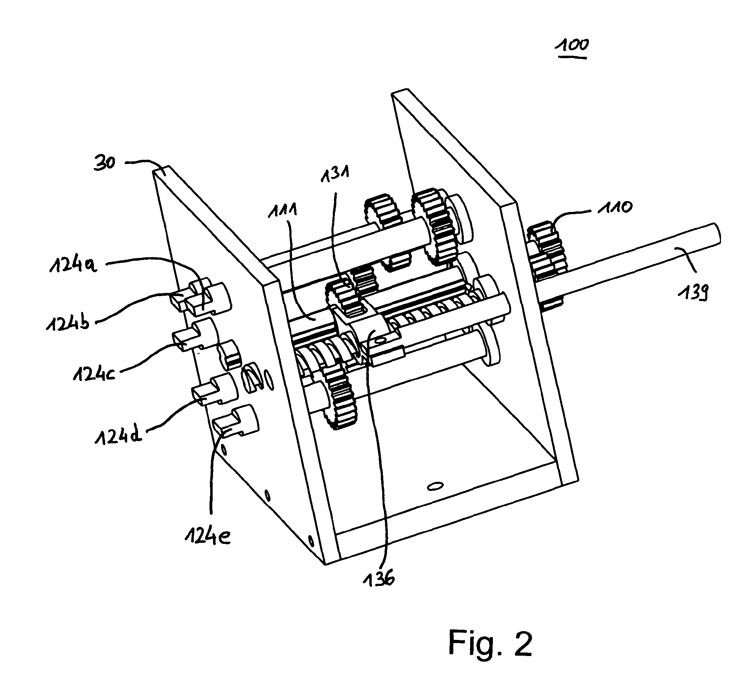

Im Folgenden wird mit Bezug auf die Figuren 2 bis 11 das Innenleben des in Figur 1 dargestellten Gehäuses 30 dargestellt. Dabei muss dieses im Folgenden dargestellte Innenleben nicht notwendigerweise im Gehäuse 30 angeordnet sein, sondern kann alternativ auch direkt in dem Antennengehäuse, d.h. in dem Radom angeordnet sein. In den dargestellten Zeichnungen bezeichnen gleiche Bezugszeichen gleiche Bauelemente bzw. gleiche Merkmale, so dass eine wiederholende Beschreibung von bereits durchgeführten Beschreibungen vermieden wird.

Aus den Figuren 2 bis 4 ist ersichtlich, dass das Innenleben des Gehäuses 30 der Multi-Strahlformeinrichtung 100 ein Antriebsglied 110 umfasst, das beispielsweise von außerhalb der Mobilfunkantenne 1 betätigbar ist. Dieses Antriebsglied 110 ist in Form eines Antriebsrads 110 ausgestaltet, das vorzugsweise die Form ein Antriebzahnrads 110 haben kann. Dieses Antriebsglied 110 kann beispielsweise manuell betätigt werden oder kann alternativ mittels einem nicht dargestellten Elektromotor angetrieben werden. Dabei könnte der Elektromotor entweder in dem oder außerhalb des Antennengehäuses angeordnet sein. Das Antriebsglied 110 ist mit einer Antriebswelle 111 drehfest verbunden.

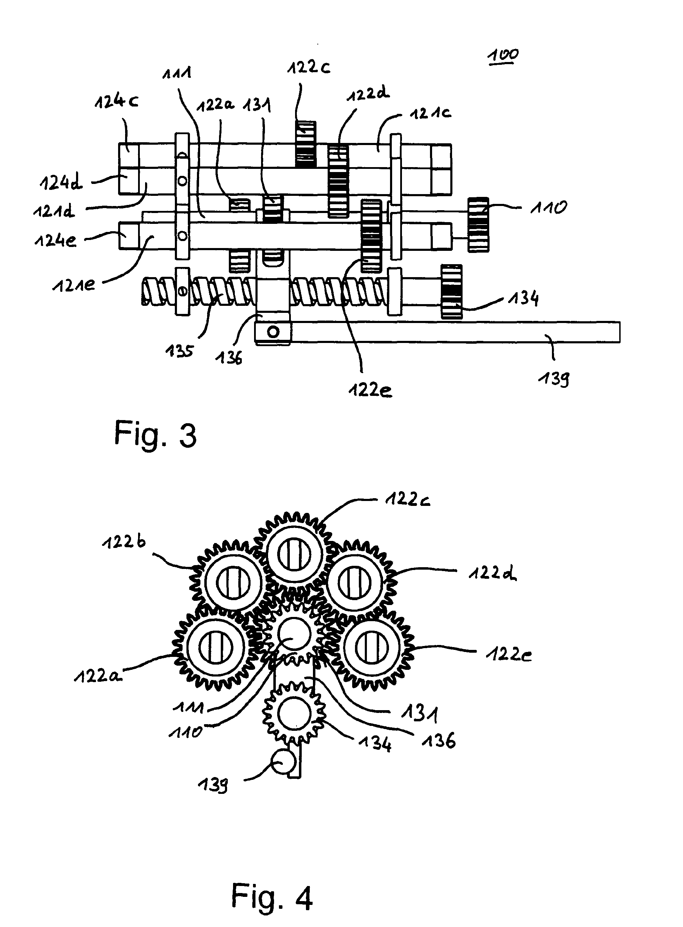

Darüber hinaus umfasst das Gehäuse 30 in dem in den Figuren 2 bis 4 dargestellten Beispiel fünf Abtriebe, die jeweils eine zur Antriebswelle 111 im wesentlichen parallele Abtriebswelle 121 und jeweils ein mit der Abtriebswelle 121 drehfest verbundenes Abtriebsrad 122 umfassen. Um eine Zuordnung der Abtriebswellen 121 und der Abtriebsräder 122 in den Figuren 3 und 4 zu erleichtern, sind in den Figuren 3 und 4 die Abtriebsräder 122 mit den Bezugszeichen 122a bis 122e und die Abtriebswellen 121 mit den Bezugszeichen 121a bis 121e versehen, so dass eine korrekte Zuordnung zwischen der Projektionsansicht von Figur 4 und der Seitenansicht von Figur 3 möglich ist.

Die jeweiligen Abtriebswellen 121a bis 121e enden in jeweiligen Abtriebsschnittstellen 124a bis 124e, die mittels in Figur 1 schematisch dargestellten Antriebsverbindungen 10 mit jeweiligen Phasenschiebern 20 wirkverbunden sind.

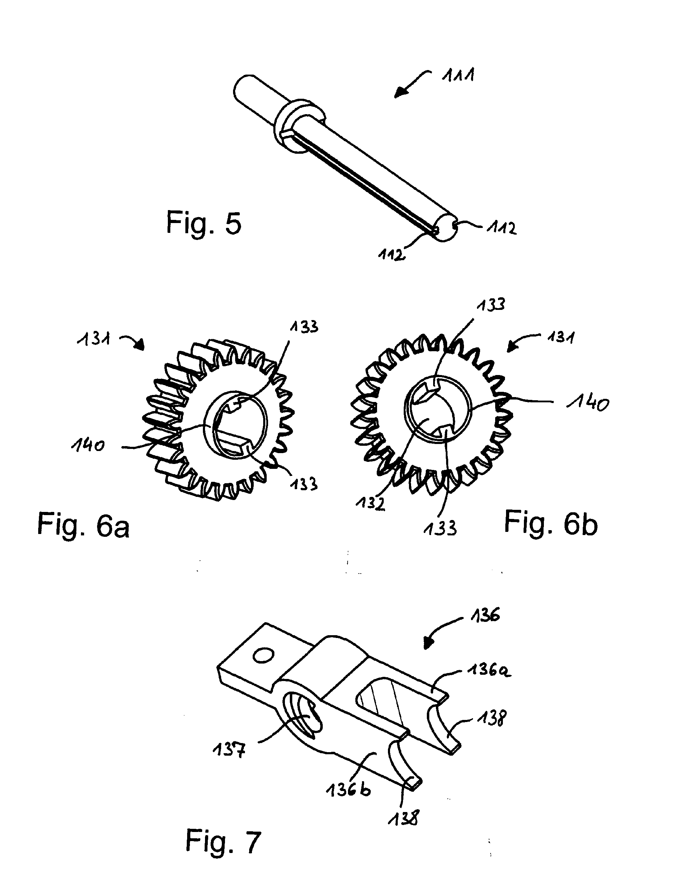

Darüber hinaus umfasst das Innenleben des Gehäuses 30 der Multi-Strahlformeinrichtung 100 gemäß der ersten Ausführungsform eine Umschalteinrichtung, die ein Verstellantriebsglied 134 und eine mit dem Verstellantriebsglied 134 zusammenwirkende, als Gewindespindel 135 ausgestaltete Verstelleinrichtung 135 umfasst. Weiterhin umfasst die Umschalteinrichtung einen als Schieber 136 ausgebildeten Schlitten 136, an dessen einem Ende ein Umschaltrad 131 gegenüber dem Schieber 136 drehbar angeordnet ist. Der in Figur 7 dargestellte Schieber 136 weist eine Durchgangsbohrung 137 mit innenliegendem Gewinde auf, das dazu ausgebildet ist, mit dem Gewinde der Gewindespindel 135 zusammenzuwirken. Der Schieber 136 ist mit der Gewindespindel 135 über das innenliegende Gewinde der Durchgangsbohrung 137 verbunden. Das Umschaltrad 131 wiederum ist mit den Antriebsglied 110 und der Antriebswelle 111 drehfest verbunden und ist auf der Antriebswelle 111 verschiebbar.

Der Schieber 136 weist an den Enden der Backen 136a und 136b zwei zylindrische Verdrehsicherungen 138 auf, die die Antriebswelle 111 umfassen. Dadurch wird ein Verdrehen des Schiebers 136 gegenüber der Gewindespindel 135 verhindert, wodurch der Schieber 136 bei einer Rotationsbewegung der Gewindespindel 135 eine Translationsbewegung ausführt.

Durch Betätigen bzw. Drehen des als Verstellantriebsrad 134 ausgestalteten Verstellantriebsglieds 134 wird die mit dem Verstellantriebsglied 134 drehfest verbundene Gewindespindel 135 gedreht. Diese Drehbewegung der Gewindespindel 135 wird in eine translatorische Bewegung des Schiebers 136 umgewandelt. Daher wird eine Drehbewegung der Gewindespindel 135 in eine translatorische Bewegung des Umschaltrads 131 umgewandelt.

Anstelle der Gewindespindel 135 könnte auch eine Teleskopanordnung als Verstelleinrichtung 135 vorgesehen sein, an deren Ende ein Schieber 136 bzw. ein Schlitten 136 angeordnet ist. Auch könnte eine entsprechende Teleskopanordnung motorisch betrieben sein. Gleichfalls kann das Verstellantriebsglied 134 motorisch angetrieben werden.

An dem dem Umschaltrad 131 gegenüberliegenden Ende des Schiebers 136 ist eine Indikatoreinrichtung 139 an dem Schieber 136 befestigt. Die als Stift bzw. Schaft ausgebildete Indikatoreinrichtung 139 ragt durch eine Öffnung des Gehäuses 30 zur Außenseite hinaus und ist durch diese Öffnung gelagert, wodurch einem Drehen des Schiebers 136 entgegenwirkt wird. Anhand der Position der Indikatoreinrichtung 139 gegenüber dem Gehäuse 30 oder gegenüber dem Antennengehäuse kann die Position des Umschaltrads 131 bestimmt werden. Somit kann bestimmt werden, mit welchem der Abtriebsräder 122a bis 122e das Umschaltrad 131 in Wirkverbindung steht. Die Indikatoreinrichtung 139 kann aber auch elektronisch ausgestaltet sein, so dass die Information über die Position des Schiebers 136 und somit des Umschaltrads 131 an eine elektronische Verarbeitungseinheit ausgegeben werden kann.

Aus Figur 4, die eine frontseitige Projektionsdarstellung des Innenlebens des Gehäuses 30 der Multi-Strahlformeinrichtung 110 gemäß der ersten Ausführungsform ist, ist ersichtlich, dass die jeweiligen Abtriebsräder 122a bis 122e sich in Projektion überschneiden. Aus Figur 3 ist aber ersichtlich, dass die jeweiligen Abtriebsräder 122a bis 122e unterschiedliche Abstände von der Stirnseite des Gehäuses aufweisen, so dass die jeweiligen Abtriebsräder 122a bis 122e miteinander nicht in Kontakt stehen. Eine entsprechende Anordnung ist besonders platzsparend, da sich die Abtriebsräder in Projektion einander überlappen.

Jedoch ist die vorliegende Erfindung auf eine entsprechende Anordnung der Abtriebsräder 122 und der Abtriebswellen 121 nicht beschränkt. Alternativ könnten die jeweils voneinander getrennten Abtriebswellen entlang einer gemeinsamen Achslinie angeordnet sein, und das Umschaltrad würde auf einer parallel zu den Abtriebswellen angeordneten Antriebswelle verschoben werden, so dass das Umschaltrad selektiv mit zumindest einem der Abtriebsräder in Wirkverbindung bringbar wäre. Die jeweiligen Abtriebswellen können mit den einzelnen Phasenschiebern beispielsweise über elastische Antriebsverbindungen oder über Antriebsverbindungen mit Umlenkungseinrichtungen wirkverbunden sein.

Eine Kraftübertragung bzw. eine Momentenübertragung von dem Antriebsglied 110 auf eine der Abtriebsschnittstellen 124a bis 124e erfolgt somit durch ein Antreiben des Antriebsglieds 110, das über die Antriebswelle 111 drehfest mit dem Umschaltrad 131 verbunden ist. Sowohl das Umschaltrad 131 als auch die Abtriebsräder 122a bis 122e sind als Zahnräder ausgestaltet. Wenn das Umschaltzahnrad 131 mit einem der Abtriebsräder 122a bis 122e kämmt, dann wird eine auf das Antriebsglied 110 wirkende Kraft bzw. wirkendes Moment auf die entsprechende Abtriebswelle 121a bis 121e übertragen.

Aus den Figuren 2 und 4 ist ersichtlich, dass die Abtriebswellen 121a bis 121e in stirnseitiger Projektion um die Antriebswelle 111 als Kreiszentrum angeordnet sind. Aufgrund des räumlichen Versatzes der jeweiligen Abtriebsräder 122a bis 122e von der Stirnseite des Gehäuses 30 bzw. von einer Stirnseite des Gehäuses der Mobilfunkantenne sind die einzelnen Abtriebsräder 122a bis 122e auf einer Spiralbahn um die Antriebswelle 111 angeordnet. In den Figuren 2 bis 4 weist das Umschaltrad 131 solch eine Breite auf, dass aufgrund des Abstandes der einzelnen Abtriebsräder 122a bis 122e jeweils nur eines der Abtriebsräder 122a bis 122e mit dem Umschaltrad 131 in Wirkverbindung steht. Alternativ könnte jedoch das Umschaltrad 131 solch eine Breite aufweisen, dass diese mit zwei oder mit mehreren der Abtriebsräder 122 in Wirkverbindung stehen würde.

Figur 5 zeigt eine isometrische Darstellung der Abtriebswelle 111. Die Abtriebswelle 111 weist an ihrer Längsseite in dem dem Antriebsglied 110 entfernten Bereich zwei Nuten 112 auf. In dem in den Figuren 6 dargestellten Ausführungsbeispiel des Umschaltrads 131 weist das Umschaltrad 131 in der Umschaltradöffnung 132 zwei Federn 133 bzw. zwei Zapfen 133 auf, die in die Nuten 112 der Antriebswelle 131 eingreifen können. Folglich besteht eine Nut-Feder-Verbindung zwischen dem Umschaltrad 131 und der Antriebswelle 111. Somit weist das Umschaltrad 131 solch eine der Querschnittsform der Antriebswelle 111 entsprechende Umschaltradöffnung 132 auf, dass das Umschaltrad 131 mit der Antriebswelle 111 drehfest verbunden und entlang der Längsausdehnung der Antriebswelle 111 verschiebbar ist. Weiterhin sind an beiden Stirnflächen des Umschaltrades zylindrische Absätze 140 ausgebildet.

Prinzipiell reicht es für eine drehfeste Verbindung zwischen dem Umschaltrad 131 und der Antriebswelle 111, wobei das Umschaltrad 131 gegenüber der Antriebswelle 111 verschiebbar sein soll, aus, dass die Antriebswelle 111 in dem dem Antriebsglied 110 entfernten Bereich eine nicht kreissymmetrisch Querschnittsform aufweist, und dass das Umschaltrad mittig eine der Querschnittsform der Antriebswelle 111 entsprechende Umschaltradöffnung 132 aufweist. Folglich könnte beispielsweise die Antriebswelle 111 in dem dem Antriebsglied 110 entfernten Bereich eine elliptische Form aufweisen. Entsprechend müsste die Umschaltradöffnung 132 des Umschaltrads auch eine elliptische Form aufweisen.

Figur 7 zeigt eine perspektivische Darstellung des Schiebers 136. Der Schieber 136 weist eine Durchgangsöffnung 137 mit einem Innengewinde auf. Ferner weist der Schieber 136 an dem dem Umschaltrad 131 zugewandten Ende eine Verdrehsicherung 138 oder Aufnahme 138 auf, die im Zusammenwirken mit den zylindrischen Absätzen 140 am Umschaltrad 131 und der Antriebswelle das Verdrehen des Schiebers 136 gegenüber der Gewindespindel 135 verhindert. Die Aufnahme 138 liegt an den Absätzen 140 des Umschaltrades so auf, dass die Antriebswelle 111 und das Umschaltrad in ihrer Drehung durch die Aufnahme 138 nicht behindert werden. Die Aufnahme 138 ist an zwei Backen 136a und 136b des Schiebers 136 gebildet. Das Umschaltrad 131 ist zwischen den zwei Backen 136a und 136b des Schiebes 136 positioniert, so dass durch eine translatorische Bewegung des Schiebers 136 das Umschaltrad 131 auf der Antriebswelle 111 verschoben werden kann.

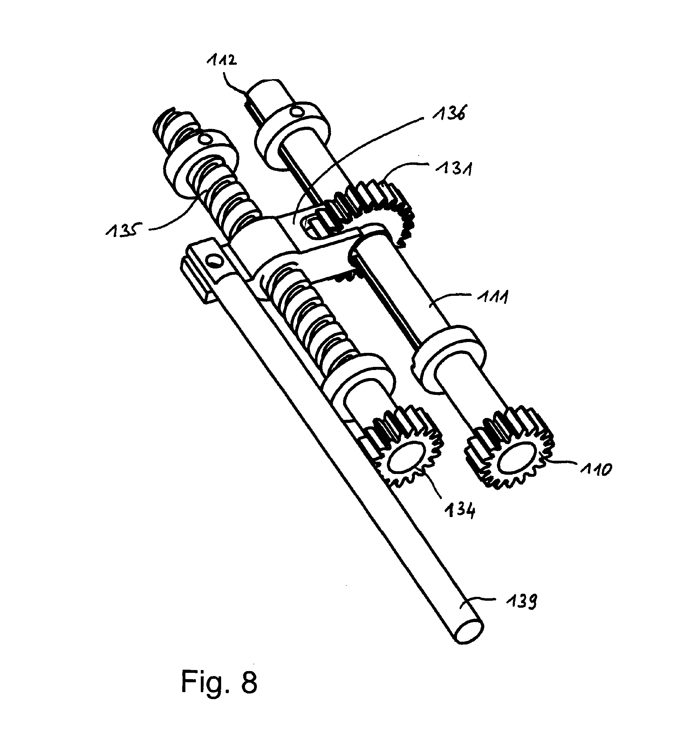

Figur 8 zeigt ein Zusammenbaubeispiel einer Umschalteinrichtung in einer erfindungsgemäßen Multi-Strahlformeinrichtung 100. Die Antriebswelle 111 ist drehfest mit dem Antriebsglied 110 verbunden. Auf der Antriebswelle 111 ist das Umschaltrad 131 drehfest mit der Antriebswelle 111 verbunden. Die Federn 133 bzw. Zapfen 133 in der Umschaltradöffnung 132 greifen in die Nuten 112 der Antriebswelle 111 ein, so dass das Umschaltrad 131 gegenüber der Antriebswelle 111 verschiebbar ist.

Das Umschaltrad 131 ist zwischen den Backen 136a und 136b des Schiebers 136 angeordnet. Durch die Durchgangsöffnung 137 des Schiebers 136 ragt die Gewindespindel 135. Da der Schieber 136 sich wegen den mit den Umschaltradabsätzen 140 und der Antriebswelle 111 zusammenwirkenden Verdrehsicherungen 138 gegenüber der Gewindespindel 135 nicht verdrehen kann, wird durch ein Drehen des Verstellantriebsglieds 134, das drehfest mit der Gewindespindel 135 verbunden ist, eine Drehbewegung der Gewindespindel 135 in eine translatorische Bewegung des Schiebers 136 umgewandelt. Diese translatorische Bewegung des Schiebers 136 wird auf das Umschaltrad 131 übertragen. An der der Aufnahme 138 gegenüberliegenden Seite des Schiebers 136 ist die Indikatoreinrichtung 139 in Form eines Stiftes mit dem Schieber 136 verbunden.

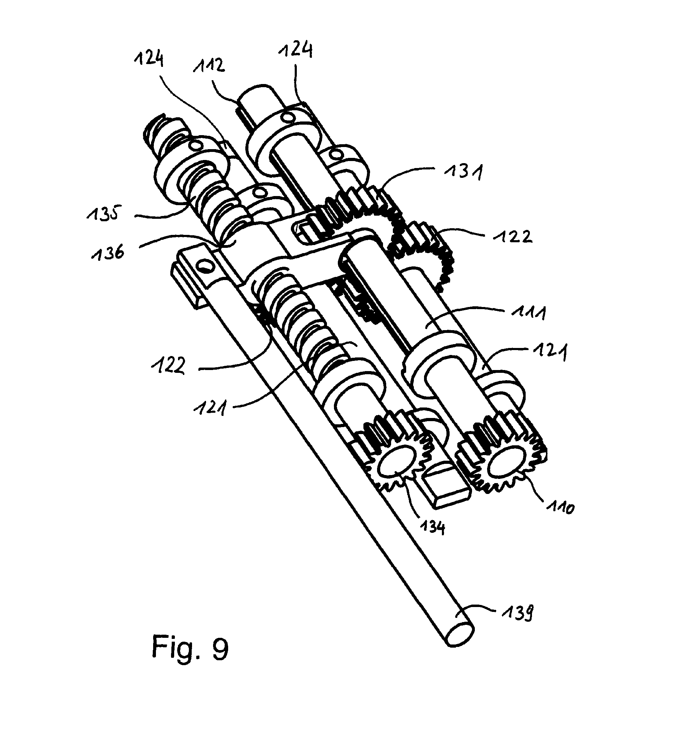

In Figur 9 ist die gleiche Anordnung wie in Figur 8 dargestellt, wobei zwei Abtriebe der Anordnung zugefügt sind. Parallel zur Antriebswelle 111 und zu der Gewindespindel 135 sind zwei Abtriebswellen 121 angeordnet. Auf den Abtriebswellen 121 ist jeweils ein Abtriebsrad 122 drehfest mit den Abtriebswellen 121 verbunden. Durch Verschieben des Umschaltrads 131 mittels der oben beschriebenen Umschalteinrichtung lässt sich das Umschaltrad 131 mit einem beliebigen der Abtriebsräder 122 in Wirkverbindung bringen.

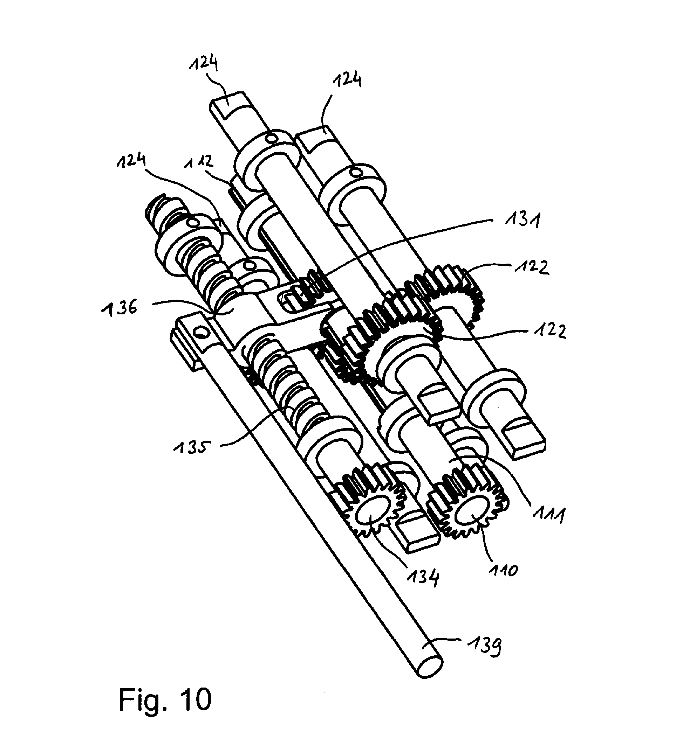

Figur 10 zeigt die gleiche Anordnung wie in Figur 9, wobei zu den zwei Abtrieben zwei weitere Abtriebe hinzugefügt sind, so dass insgesamt vier Abtriebe in der Anordnung vorgesehen sind. Durch ein Betätigen des Verstellantriebsglieds 134 kann das Umschaltrad 131 mit einem beliebigen der Abtriebsräder 122 in Wirkverbindung gebracht werden.

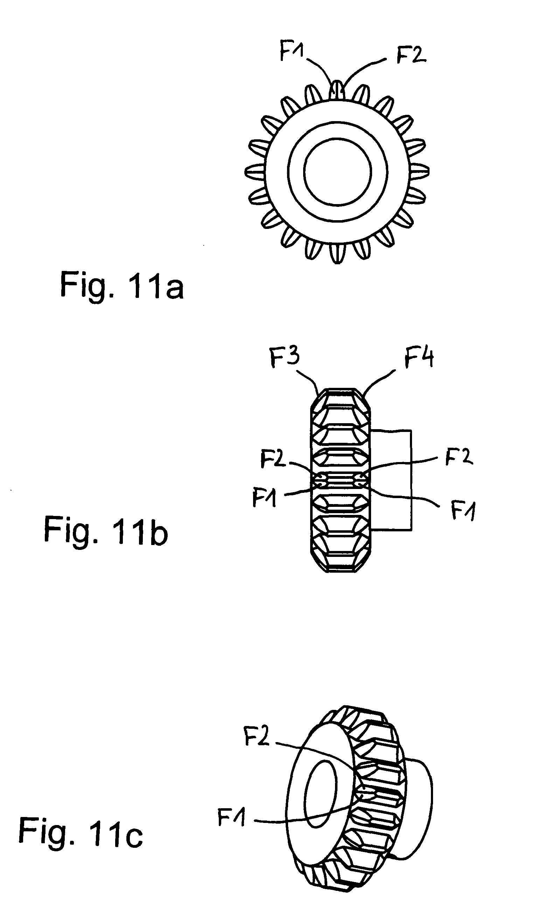

Figuren 11a, 11b und 11c zeigen unterschiedliche Ansichten eines vorteilhaft ausgestalteten Zahnrads, das als Antriebsglied 110, als Abtriebsrad 122 und als Umschaltrad 131 verwendet werden kann. Dabei zeigt Figur 11a eine stirnseitige Ansicht des Zahnrads, Figur 11b zeigt eine Seitenansicht des Zahnrads und Figur 11c zeigt eine perspektivische Darstellung des Zahnrads.

Das dargestellte Zahnrad weist an allen Zähnen Fasen bzw. Abschrägungen F3, F4 gegenüber den Zahnradstirnseiten auf. Zusätzlich ist jede daraus resultierende Zahnstirnfläche doppelseitig so mit einer Fase F1, F2 versehen, dass sich in der stirnseitigen Ansicht 11a bei jedem Zahn eine stirnseitige Kante ergibt. Hierdurch wird gewährleistet, dass beim Verschieben des Umschaltrads 131 bei Aufeinanderstoßen von Zähnen des Umschaltrads 131 mit Zähnen des Abtriebsrads 121 die beiden Zahnräder einander so verschieben, dass ein zuverlässiges Ineinandergreifen der Zähne gewährleistet wird, so dass ein zuverlässiges Kämmen des Umschaltrads 131 mit dem Abtriebsrad 122 erreicht wird.

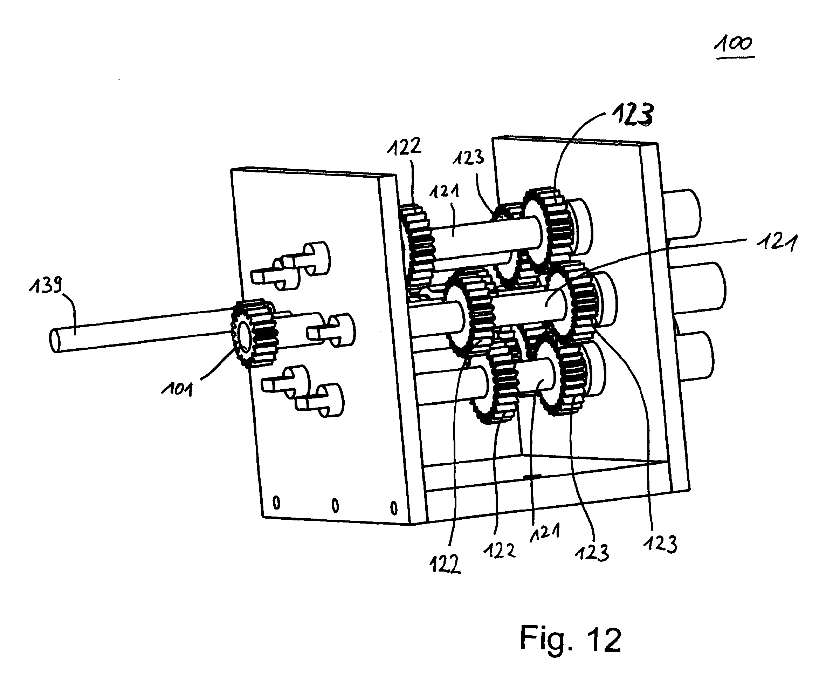

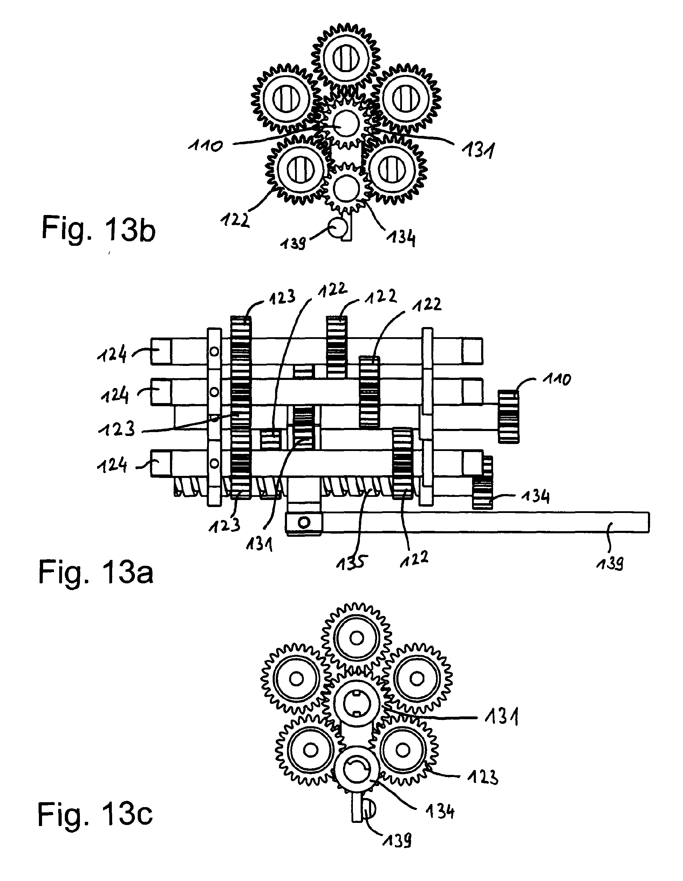

Figur 12 zeigt eine Abwandlung der ersten Ausführungsform des Innenlebens des Gehäuses 30 der ersten Ausführungsform der Multi-Strahlformeinrichtung 100. Die Figuren 13a bis 13c zeigen eine Seitenansicht der Anordnung aus Figur 12, eine frontseitige Projektionsansicht der Anordnung aus Figur 12 bzw. eine rückseitige Projektionsansicht der Anordnung aus Figur 12, wobei jeweils das Gehäuse nicht dargestellt ist.

Die Anordnung in den Figuren 12 und 13 unterscheidet sich durch die bisher beschriebene Anordnung dadurch, dass jeder der Abtriebe ferner jeweils ein zweites Rad 123 umfasst, das drehfest mit der jeweiligen Abtriebswelle 121 verbunden ist. Die zweiten Räder 123 sind in einer Ebene senkrecht zu den Abtriebswellen 121 angeordnet, so dass das Umschaltrad 131 mit allen zweiten Rädern 123 simultan in Wirkverbindung bringbar ist. Eine entsprechende Anordnung bzw. Ausgestaltung der Abtriebe mit zweiten Rädern 123 kann als eine "Zentralverriegelungsanordnung" bezeichnet werden, da bei einer Wirkverbindung des Umschaltrads 131 mit jedem der zweiten Räder 123 die jeweiligen zweiten Räder 123 miteinander über das Umschaltrad 131 wiederum in Wirkverbindung stehen. Somit erfolgt eine gegenseitige Stabilisierung des Abtriebswellen untereinander.

Wird hingegen zum Antreiben des Antriebsglieds und/oder des Verstellantriebsglieds ein Elektromotor verwendet und ist das Umschaltrad 131 dermaßen positioniert, dass das Umschaltrad 131 mit allen zweiten Rädern 123 in Eingriff steht, dann verhindert das Haltemoment des Elektromotors ferner eine Verdrehen der Abtriebswellen 121. Folglich wird eine Zentralverriegelung durch die gegenseitige Stabilisierung der Abtriebswellen 121 und darüber hinaus durch das Haltemoment des Elektromotors bewirkt.

Aus den Figuren 13b und 13c ist ersichtlich, dass in frontseitiger Projektion die jeweiligen Abtriebsräder 122 miteinander nicht überlappen. Das Gleiche gilt für die jeweiligen zweiten Räder 123. Dies ist aus der rückwärtigen Projektionsansicht von Figur 13c ersichtlich. Dass sich die jeweiligen zweiten Räder 123 projektionsseitig nicht überlappen, d.h. dass diese nicht ineinander greifen, ist unbedingt notwendig, weil sonst die zweiten Räder 123 kollidieren würden.

Mit einem entsprechend groß dimensionierten Motor ist es bei dieser Ausführungsvariante auch möglich, alle Phasenschieber gleichzeitig zu verstellen.

Andererseits kann man eine beliebige Kombination von Phasenschiebern gleichzeitig verstellen, wenn man in der weiter oben erwähnten Ebene für die zweiten Räder 123 nur auf den Abtriebswellen zweite Abtriebsräder 123 positioniert, die mit den zu verstellenden Phasenschiebern zusammenwirken. Es ist sogar möglich, weitere Ebenen für dritte oder eine noch größere Anzahl von Abtriebsrädern pro Abtriebswelle zu realisieren, wodurch weitere Kombinationen von Phasenschiebern gleichzeitig verstellbar wären.

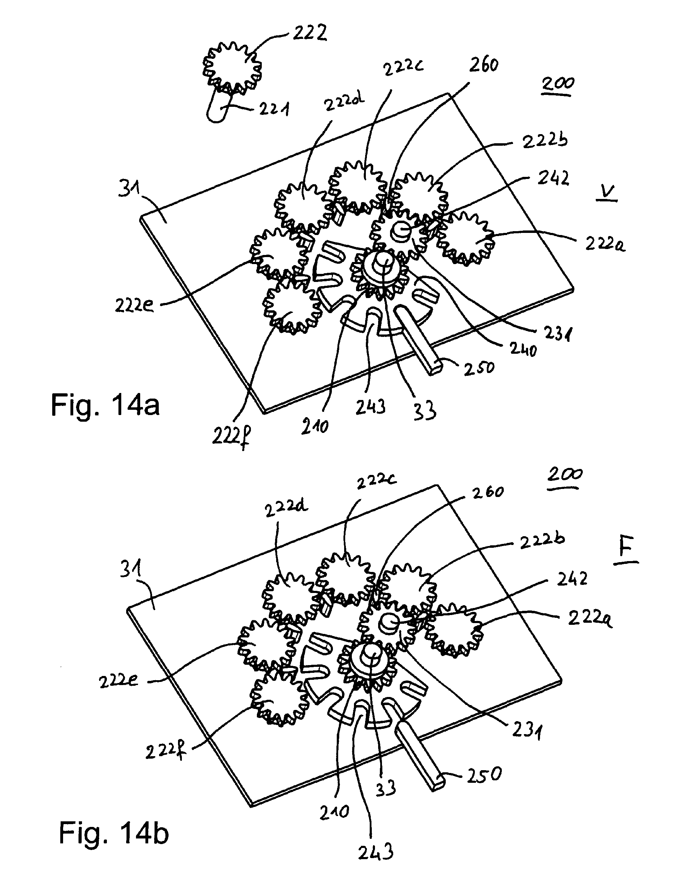

Im Folgenden wird mit Bezug auf die Figuren 14a bis 16 ein Teil einer Multi-Strahlformeinrichtung 200 gemäß einer zweiten Ausführungsform der vorliegenden Erfindung beschrieben.

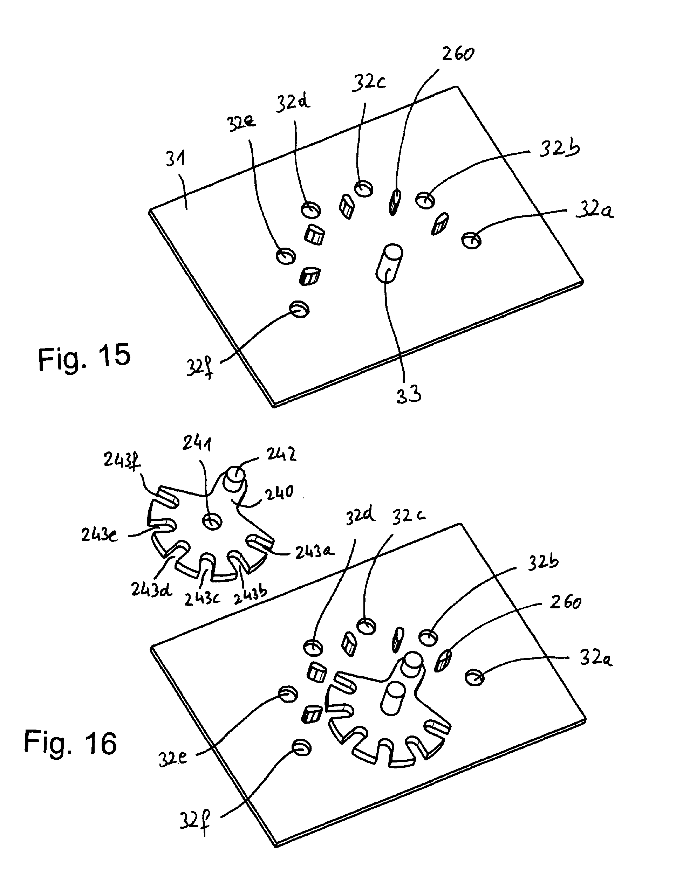

Figur 14a zeigt eine perspektivische Darstellung eines Teils der Multi-Strahlformeinrichtung 200 gemäß der zweiten Ausführungsform der Erfindung. Im oberen Bereich der Figur 14a ist ein Abtrieb dargestellt, der aus einer Abtriebswelle 221 und einem mit der Abtriebswelle 221 drehfest verbundenen als Abtriebszahnrad 222 ausgestalteten Abtriebsrad 222 besteht. In dem in Figur 14a dargestellten Teil der Multi-Strahlformeinrichtung 200 sind sechs solche Abtriebe in einem plattenartigen Material gelagert, das in Figur 15 separat dargestellt ist.

Die plattenartige Wand 31 kann Teil eines Gehäuses 30 bzw. Teil des Antennengehäuses bzw. des Radoms selber sein. Figur 15 zeigt die entsprechende Gehäusewand 31 ohne die in die Gehäusewand integrierten bzw. eingelassenen Abtriebe und Antriebe. Die Gehäusewand 31 umfasst sechs Lagerbohrungen 32a bis 32f, die auf einem Kreisabschnitt angeordnet sind. Im Mittelpunkt dieses Kreisabschnitts ist ein Lagerstift 33 angeordnet. Zwischen den einzelnen Lagerbohrungen 32a bis 32f ist jeweils eine Abrolleinrichtung 260 in Form eines Schwenkzahns 260 angeordnet.

Figur 16 zeigt die in Figur 15 dargestellte Gehäusewand 31, wobei auf dem Lagerstift 33 eine Schwenkeinrichtung 240 angeordnet ist. Die Schwenkeinrichtung 240 ist separat im oberen Bereich von Figur 16 nochmals dargestellt. Die Schwenkeinrichtung 240 umfasst eine erste Befestigungseinrichtung 241 in Form einer Lagerbohrung 241 und eine zweite Befestigungseinrichtung in Form eines Lagerstifts 242. Darüber hinaus umfasst die Schwenkeinrichtung 240 sechs Arretierungseinrichtungen 243a bis 243f in Form von Arretierungseinbuchtungen 243a bis 243f. Die Schwenkeinrichtung 240 ist mittels der ersten Befestigungseinrichtung 241 auf dem Lagerstift 33 der Gehäusewand 31 drehbar gelagert. Die einzelnen Arretierungseinrichtungen 243a bis 243f sind den entsprechenden Lagerbohrungen 32a bis 32f zugeordnet.

In Figur 14a ist dargestellt, dass die Abtriebswellen 221 der sechs Abtriebe in den sechs Lagerbohrungen 32a bis 32f gelagert sind. Somit sind die Abtriebsräder 222a bis 222f drehbar in den Lagerbohrungen 32a bis 32f gelagert.

Das Abtriebsrad 222b steht mit dem als Planetenrad ausgestalteten Umschaltrad 231 in Wirkverbindung. Das Planetenrad 231 ist drehbar auf der zweiten Befestigungseinrichtung der Schwenkeinrichtung 240 gelagert. Das Planetenrad 231 wiederum steht mit einem als Antriebszahnrad ausgestalteten Antriebsglied 210 in Wirkverbindung, das auf der Schwenkeinrichtung 240 angeordnet ist und auf dem Lagerstift 33 der Gehäusewand 31 drehbar gelagert ist. Somit ist das Antriebsglied 210 gegenüber der Gehäusewand 31 und gegenüber der Schwenkeinrichtung 240 drehbar gelagert.

In die Verriegelungsöffnung 243b bzw. in die Verriegelungsvertiefung 243b der Schwenkeinrichtung 240 greift ein Verriegelungsbolzen 250 ein, so dass die Schwenkeinrichtung 240 gegenüber der Gehäusewand 31 nicht mehr gedreht werden kann. Der Verriegelungsbolzen 250 nimmt somit eine Verriegelungsstellung V ein. In der Verriegelungsstellung V, in der der Bolzen 250 in die Verriegelungsöffnung 243b eingreift, steht das Planetenrad 231 mit dem Abtriebsrad 222b und mit dem Antriebsglied 210 in Wirkverbindung. Durch ein Antreiben des Antriegsglieds 210 wird aufgrund dieser Wirkverbindungen das Abtriebsrad 222b und die mit diesem verbundene Abtriebswelle 221 angetrieben. Mit der Abtriebswelle 221 steht wiederum eine in Figur 14a nicht dargestellte Antriebsverbindung in Wirkverbindung, die wiederum mit einem Phasenschieber, der in Figur 14a ebenfalls nicht dargestellt ist, in Wirkverbindung steht. Somit wird in der in Figur 14a dargestellten Stellung der Schwenkeinrichtung 240 durch Antreiben des Antriebsglieds 210 das Abtriebsrad 222b und der mit diesem verbundene Phasenschieber betätigt.

In den Figuren 14a bis 14d sind zum besseren Verständnis die axialen Lagesicherungen der Räder 210, 222, 231 bezüglich der Gehäusewand 31 sowie die Führung des Verriegelungsbolzens 250 nicht gezeigt. Diese können beispielsweise leicht durch Formelemente in einer zur Gehäusewand 321 parallel liegenden weiteren Gehäusewand realisiert werden.

Das Antriebsglied 210 lässt sich aber auch mit den anderen Abtriebsrädern 222a, 222c bis 222f in Wirkverbindung bringen. Anhand der Darstellungen in den Figuren 14b bis 14d wird dargestellt, wie das Antriebsglied 210 beispielsweise mit dem Abtriebsrad 222c in Wirkverbindung gebracht werden kann. In Figur 14b steht der Verriegelungsbolzen 250 nicht mehr in Eingriff mit der Verriegelungsöffnung 243b. Folglich ist die Schwenkeinrichtung 240 bezüglich des Lagerstifts 33 drehbar. Durch ein Antreiben des Antriebsglieds 210 wird das mit dem Antriebsglied 210 in Wirkverbindung stehende Planetenrad 231 angetrieben, so dass das Planetenrad 231 über das Abtriebsrad 222b und über die Abrolleinrichtung 260, die zwischen dem Abtriebsrad 222b und dem Abtriebsrad 222c angeordnet ist, abrollt. Das Planetenrad 231 kann über das Abtriebsrad 222b abrollen, da das Abtriebsrad 222b mit einem Phasenschieber verbunden ist, der einen gewissen Widerstand darstellt. Dieser Widerstand wiederum ist größer als der Drehwiderstand der nicht verriegelten Schwenkeinrichtung 240. Die zwischen dem Abtriebsrad 222b und dem Abtriebsrad 222c angeordnete Abrolleinrichtung 260 in Form eines Schwenkzahns 260 hat die Funktion, dass bei einer gewissen Stellung des Planetenrads 231, bei der dieses nicht mehr mit dem Abtriebsrad 222b kämmt, das Planetenrad 231 in den Schwenkzahn 260 eingreift und über diesen abrollt. Die zwischen den einzelnen Abtriebsrädern 222a bis 222f angeordneten Schwenkzähne dienen also dazu, dass bei einer Freilaufstellung F des Verriegelungsbolzens 250 das Planetenrad über die Schwenkzähne 260 abrollen kann, um in unterschiedliche Positionen bezüglich der Abtriebsräder 222a bis 222f gebracht zu werden.

Der Verriegelungsbolzen 250 kann beispielsweise durch einen Linearaktuator oder einen Elektromotor mit nachgeschaltetem Getriebe zur Umwandlung der Rotations- in eine Translationsbewegung angetrieben werden.

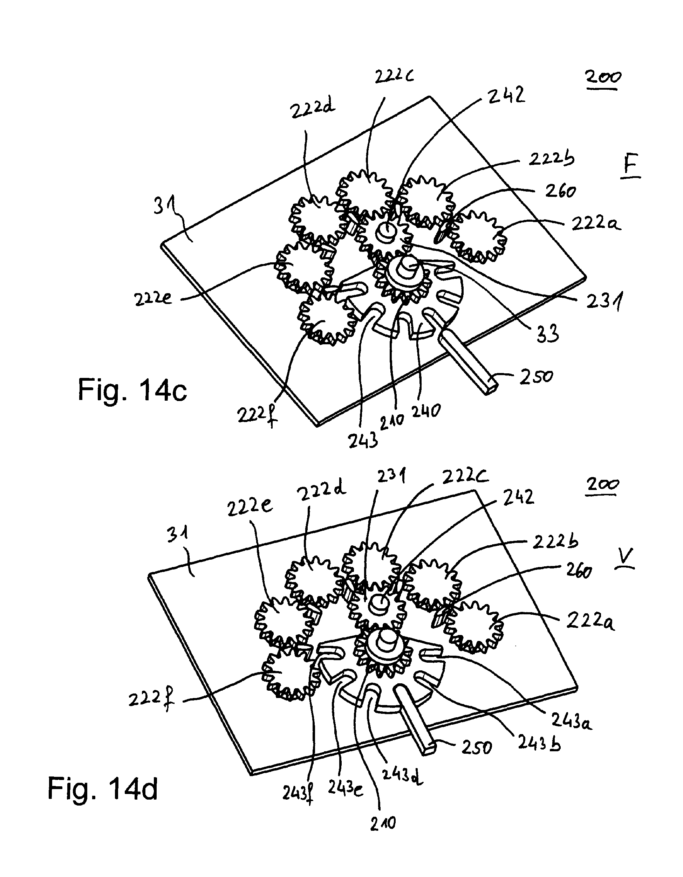

Figur 14c zeigt die Situation, in der das Planetenrad 231 mit dem Abtriebsrad 222c kämmt, folglich mit diesem in Wirkverbindung steht. Weiterhin befindet sich der Verriegelungsbolzen 250 in der Freilaufstellung F, bei der durch ein Antreiben des Antriebsglieds 210 die Schwenkeinrichtung 240 und somit auch das Planetenrad 231 weiter gedreht bzw. geschwenkt werden würde. In Figur 14d greift der Verriegelungsbolzen 250 in die Verriegelungsöffnung 243c ein, so dass die Schwenkeinrichtung 240 verriegelt ist und sich nicht mehr um den Lagerstift 33 drehen kann. Durch ein Antreiben des Antriebsglieds 210 wird dann folglich das Abtriebsrad 222c angetrieben.

Die sechs Arretierungseinrichtungen bzw. Verriegelungsöffnungen 243a bis 243f sind den entsprechenden Lagerbohrungen 32a bis 32f und somit den entsprechenden in den Lagerbohrungen 32a bis 32f gelagerten Abtriebsrädern 222a bis 222f zugeordnet. Durch Eingreifen des Verriegelungsbolzens 250 in eine Verriegelungsöffnungen 243a bis 243f kann somit das Planetenrad 231 mit einem der zugeordneten Abtriebsräder 222a bis 222f in Wirkverbindung gebracht werden.

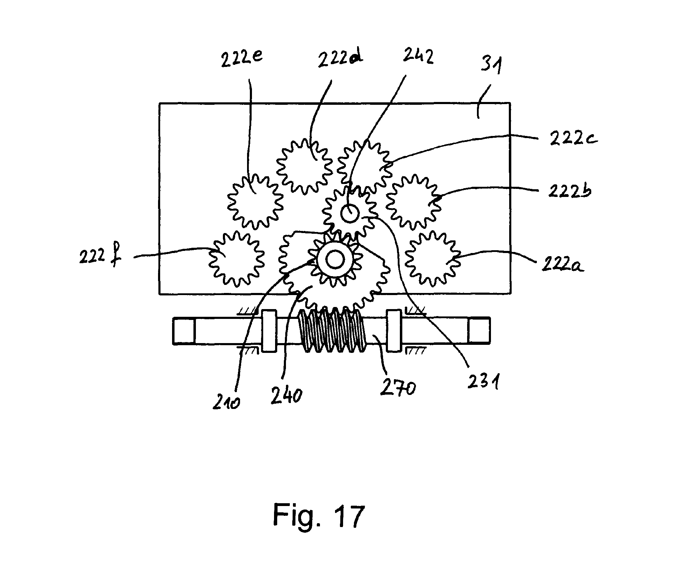

Figur 17 zeigt eine abgewandelte Ausführung gegenüber der in den Figuren 14a bis 14d sowie 15 und 16 gezeigten Variante der Erfindung, wobei die Schwenkeinrichtung 240 als Schneckenrad 240 ausgebildet ist und durch eine Schnecke 270 direkt angetrieben wird. Das Schneckengetriebe ist selbsthemmend ausgeführt, so dass sich das Schwenkrad 240 nur verdreht, wenn ein Motor die Schnecke 270 antreibt. Bei diesem Aufbau sind die Verriegelungsöffnungen 243 in der Schwenkeinrichtung 240, der Verriegelungsbolzen 250 und die Schwenkzähne 260 nicht erforderlich.

In der in den Figuren 14a bis 14d und 15 und 16 dargestellten zweiten Ausführungsform der Erfindung sind die Abtriebsräder 222a bis 222f auf einem Kreisabschnitt angeordnet, in dessen Mittelpunkt das Antriebsglied 210 angeordnet ist und mittels dem Planetenrad 231 mit einem der Abtriebsräder 222a bis 222f kämmt. Alternativ zu dieser Ausführungsform könnte das Antriebsglied 210 schwenkbar angeordnet sein. Bei einer entsprechenden Ausgestaltung würde das Umschaltrad bzw. Planetenrad 231 das Antriebsglied sein. Dabei würde das Schwenkzentrum der Schwenkbewegung des Antriebsglieds 210 mit dem Kreismittelpunkt des Kreises zusammenfallen, auf dem die Abtriebsräder 222a bis 222f angeordnet sind. Das Antriebsglied 210 müsste entsprechend gelagert sein und die Position des Antriebsglieds 210 in der entsprechenden Lagerung müsste mittels einer Arretierungseinrichtung fixierbar sein. Mit einer fixierten Arretierungseinrichtung würde das Antriebsglied 210 mit einem der Abtriebsräder 222a bis 222f in Wirkverbindung stehen, ohne dass zwischen dem Antriebsglied 210 und dem entsprechenden Abtriebsrad 222a bis 222f ein Umschaltrad bzw. Planetenrad angeordnet sein müsste. Bei nicht aktivierter Arretierungseinrichtung würde durch Antreiben des Antriebsglieds dieses über die einzelnen Abtriebsräder 222a bis 222f und über die einzelnen Abrolleinrichtungen 260 abrollen, so dass das Antriebsglied mit einem beliebigen der Abtriebsräder 222a bis 222f in Wirkverbindung gebracht werden könnte.

In einer weiteren Alternative der zweiten Ausführungsform könnten die einzelnen Abtriebsräder 222a bis 222f auf einer geraden Linie angeordnet sein, so dass die Abtriebswellen 221 eine gemeinsame Ebene aufspannen, und das Antriebsglied könnte in einer entsprechenden Führungseinrichtung entlang der Antriebsräder hin- und herbewegt werden, so dass das Antriebsglied 210 mit einem beliebigen der Abtriebsräder in Wirkverbindung gebracht werden könnte.

Auch in der zweiten Ausführungsform ist es möglich, eine Indikatoreinrichtung vorzusehen, die beispielsweise mit der Schwenkeinrichtung 240 verbunden sein könnte. In Abhängigkeit der Stellung bzw. der Winkelstellung der Schwenkeinrichtung 240 würde auch die Stellung der mit der Schwenkeinrichtung 240 verbundenen Indikatoreinrichtung variieren, so dass anhand der Stellung bzw. der Position der Indikatoreinrichtung darauf zurückn geschlossen werden könnte, mit welchem der Abtriebsräder 222a bis 222f das Antriebsglied 210 in Wirkverbindung steht. Natürlich wäre die Position der Arretierungseinrichtung auch elektronisch erfassbar. Darüber hinaus wäre es auch möglich, anstelle dieser mechanischen Indikatoreinrichtung eine elektronische Indikatoreinrichtung vorzusehen.

### Bezugszeichenliste:

- 1: Mobilfunkantenne
- 10: Antriebsverbindung
- 20: Phasenschieber
- 30: Gehäuse
- 31: Gehäusewand
- 32a-32f: Lagerbohrung
- 33: Lagerstift
- 100: Multi-Strahlformeinrichtung
- 110: Antriebsglied
- 111: Antriebswelle
- 112: Nut (der Antriebswelle)
- 121: Abtriebswelle
- 122 und 122a-122f: Abtriebsrad
- 123: zweites Rad (auf der Abtriebswelle)
- 124: Abtriebsschnittstelle
- 131: Umschaltrad
- 132: Umschaltradöffnung (im Umschaltrad)
- 133: Feder/Zapfen (in Umschaltradöffnung)
- 134: Verstellantriebsglied (der Umschalteinrichtung)
- 135: Verstelleinrichtung/Gewindespindel (der Umschalteinrichtung)
- 136: Schieber (der Umschalteinrichtung)
- 136a, 136b: Backe (des Schiebers)
- 137: Durchgangsöffnung/Gewindeaufnahme (des Schiebers)
- 138: Verdrehsicherung
- 139: Indikatoreinrichtung (der Umschalreinichtung)
- 140: zylindrischer Absatz am Umschaltrad
- 200: Multi-Strahlformeinrichtung
- 210: Antriebsglied
- 221: Abtriebswelle
- 222 und 222a-222f: Abtriebsrad
- 231: Umschaltrad, Planetenrad
- 240: Schwenkeinrichtung (der Umschalteinrichtung)
- 241: erste Befestigungseinrichtung (der Schwenkeinrichtung)
- 242: zweite Befestigungseinrichtung (der Schwenkeinrichtung)
- 243 und 243a-243f: Arretiereinrichtung, Verriegelungsöffnung (der Schwenkeinrichtung)
- 250: Verriegelungsbolzen
- 260: Abrolleinrichtung, Schwenkzahn
- 270: Schnecke
- F1, F2: Fase der Zahnstirnseite
- F3, F4: Fase bzw. Abschrägung des Zahns gegenüber der Zahnradstirnseite
- F: Freilaufstellung
- V: Verriegelungsstellung

## Patentansprüche

1. Mobilfunkantenne (1) mit einer Multi-Strahlformeinrichtung (100, 200), wobei die Multi-Strahlformeinrichtung (100, 200) folgendes umfasst:
- ein antreibbares Antriebsglied (110, 210) mit einer Antriebswelle (111);
- zumindest zwei Abtriebe, die jeweils eine zur Antriebswelle (111) im Wesentlichen parallele Abtriebswelle (121, 221) und jeweils zumindest ein mit der Abtriebswelle (121, 221) drehfest verbundenes Abtriebsrad (122, 222) umfassen;
- eine der Anzahl der Abtriebe entsprechende Anzahl von Antriebsverbindungen (10);
- zumindest zwei Phasenschieber (20), von denen jeder mit jeweils einem der Abtriebe über jeweils eine der Antriebsverbindung (10) in Wirkverbindung steht, so dass die Phasenschieber (20) mittels den mit diesen wirkverbundenen Abtrieben verstellbar sind,
**gekennzeichnet durch** die folgenden Merkmale:
- die jeweiligen axialen Positionen der Abtriebsräder (122, 222) sind bezüglich des Antriebsglieds (110, 210) unveränderlich;
- die Multi-Strahlformeinrichtung (100, 200) umfasst ferner eine Umschalteinrichtung, mittels der das Antriebsglied (110, 210) selektiv mit unterschiedlichen der Abtriebsräder (122, 222) in Wirkverbindung bringbar ist; und
- die Multi-Strahlformeinrichtung (100, 200) ist dazu ausgebildet, dass das mit dem Antriebsglied (110, 210) in Wirkverbindung stehende Abtriebsrad (122, 222) durch Antreiben des Antriebsglieds (110, 210) stets angetrieben wird, wobei eine Drehrichtungsumkehrung des Antriebsglieds (110, 210) eine Drehrichtungsumkehrung des mit diesem wirkverbundenen Abtriebrads (122, 222) bewirkt.

2. Mobilfunkantenne (1) nach Anspruch 1, **gekennzeichnet durch** die folgenden Merkmale:
- die Umschalteinrichtung umfasst ein Umschaltrad (131), das mit dem Antriebsglied (110) und der Antriebswelle (111) drehfest verbunden und auf der Antriebswelle (111) verschiebbar ist;
- mittels der Umschalteinrichtung ist das Umschaltrad (131) auf der Antriebswelle (111) translatorisch verschiebbar, so dass das Antriebsglied (110) mit unterschiedlichen der beiden Abtriebsräder (122) in Wirkverbindung bringbar ist.

3. Mobilfunkantenne (1) nach Anspruch 2, **gekennzeichnet, durch:**
- die Antriebswelle (111) weist in dem dem Antriebsglied (110) entfernten Bereich eine nicht kreissymmetrische Querschnittsform auf;
- das Umschaltrad (131) weist mittig solch eine der Querschnittsform der Antriebswelle (111) entsprechende Umschaltradöffnung (132) auf, dass das Umschaltrad (131) mit der Antriebswelle (111) drehfest verbunden und entlang der Längsausdehnung der Antriebswelle (111) verschiebbar ist.

4. Mobilfunkantenne (1) nach einem der Ansprüche 2 oder 3, **dadurch gekennzeichnet, dass** die Umschalteinrichtung
- ein Verstellantriebsglied (134),
- eine mit dem Verstellantriebsglied (134) in Wirkverbindung stehende Verstelleinrichtung (135),
- und einen mit der Verstelleinrichtung (135) zusammenwirkender Schieber (136), an dessen einem Ende das Umschaltrad (131) gegenüber dem Schieber (136) drehbar angeordnet ist,
umfasst, wobei die Umschalteinrichtung dazu ausgebildet ist, dass durch Betätigung des Verstellantriebsglieds (134) eine translatorische Verschiebung des Schiebers (136) und somit des Umschaltrads (131) bewirkbar ist.

5. Mobilfunkantenne (1) nach Anspruch 4, **gekennzeichnet durch:**
- die Verstelleinrichtung (135) ist als eine Gewindespindel (135) ausgestaltet;
- der Schieber (136) weist eine Durchgangsöffnung (137) mit einem Innengewinde auf,
- die Gewindespindel (135) ist in der Durchgangsbohrung (137) des Schiebers (136) aufgenommen und der Schieber (136) ist so befestigt, dass dieser sich bei einer Drehung der Gewindespindel (135) nicht mitdreht, so dass eine Drehbewegung der Gewindespindel (135) in eine translatorische Bewegung des Schiebers (136) umgewandelt wird.

6. Mobilfunkantenne (1) nach einem der vorangehenden Ansprüche, **gekennzeichnet durch:**
- die Abtriebswellen (121) sind in stirnseitiger Projektion auf einem Kreisabschnitt um die Antriebswelle (111) als Kreiszentrum angeordnet; und
- zumindest zwei der Abtriebe umfassen ferner jeweils mindestens ein zweites Rad (123), das drehfest mit der jeweiligen Abtriebswelle (121) so verbunden ist, dass zumindest zwei der zweiten Räder (123) in einer oder mehreren Ebenen angeordnet sind, so dass das Umschaltrad (131) mit zumindest zwei der zweiten Räder (123) simultan in Wirkverbindung bringbar ist.

7. Mobilfunkantenne (1) nach Anspruch 1, **gekennzeichnet durch** die folgenden Merkmale:
- die Umschalteinrichtung umfasst ein Umschaltrad (231), das mit dem Antriebsglied (210) in Wirkverbindung steht;
- mittels der Umschalteinrichtung ist das Umschaltrad (231) bewegbar, so dass das Antriebsglied (210) über das Umschaltrad (231) mit einem der beiden Abtriebsräder (222) in Wirkverbindung bringbar ist.

8. Mobilfunkantenne (1) nach Anspruch 7, **dadurch gekennzeichnet, dass** das Umschaltrad (231) samt einer Umschaltradachse, auf der das Umschaltrad (231) gelagert ist, radial um die Antriebswelle (221) als Schwenkzentrum schwenkbar sind.

9. Mobilfunkantenne (1) nach einem der vorangehenden Ansprüche, **dadurch gekennzeichnet, dass** die Abtriebswellen (121, 221) in stirnseitiger Projektion auf einem Kreisabschnitt um ein Kreiszentrum angeordnet sind.

10. Mobilfunkantenne (1) nach Anspruch 9, **dadurch gekennzeichnet, dass** die Antriebswelle (111) oder ein Schwenkzentrum des Antriebsglieds (210) im Kreiszentrum ist.

11. Mobilfunkantenne (1) nach einem der vorangehenden Ansprüche, **dadurch gekennzeichnet, dass** die Umschalteinrichtung ferner eine Indikatoreinrichtung (139) umfasst, die ausgebildet ist zum Anzeigen, mit welchem der Abtriebsräder (122, 222) das Antriebsglied (110, 210) in Wirkverbindung steht.

12. Mobilfunkantenne (1) nach einem der Ansprüche 7 bis 11, **gekennzeichnet durch:**
- die Umschalteinrichtung umfasst eine Schwenkeinrichtung (240);
- die Schwenkeinrichtung (240) und das Antriebsglied (210) sind in einem Kreiszentrum eines Kreisabschnitts, auf dem die Abtriebswellen (221) angeordnet sind, drehbar gelagert;
- das Umschaltrad (231) ist an der Schwenkeinrichtung (240) so drehbar gelagert, dass das Umschaltrad (231) mit dem Antriebsglied (210) zusammenwirkt;
- die Schwenkeinrichtung (240) umfasst eine Arretiereinrichtung (243), mittels der die Schwenkeinrichtung (240) arretierbar ist, so dass bei arretierter Schwenkeinrichtung (240) **durch** Antreiben des Antriebsglieds (210) eines der Abtriebsräder (222) über das Antriebsglied (210) angetrieben wird.

13. Mobilfunkantenne (1) nach Anspruch 12, **gekennzeichnet durch:**
- die Arretiereinrichtung (243) ist in Form von zumindest zwei Verriegelungsöffnungen (243) in der Schwenkeinrichtung (240) ausgestaltet, wobei jeder Verriegelungsöffnung (243) eines der Abtriebsräder (222) zugeordnet ist;
- die Multi-Strahlformeinrichtung (200) umfasst ferner einen Verriegelungsbolzen (250), der eine Freilaufstellung (F) und eine Verriegelungsstellung (V) einnehmen kann;
- die Multi-Strahlformeinrichtung (200) ist dazu ausgebildet, dass in der Freilaufstellung (F) der Verriegelungsbolzen (250) in keine der Verriegelungsöffnungen (243) eingreift, so dass sich **durch** ein Antreiben des Antriebsglieds (210) die Schwenkeinrichtung (240) um die erste Befestigungseinrichtung (241) dreht und das Umschaltrad (231) um die erste Befestigungseinrichtung (241) als Schwenkzentrum verschenkt wird;
- die Multi-Strahlformeinrichtung (200) ist dazu ausgebildet, dass in der Verriegelungsstellung (V) der Verriegelungsbolzen (250) in eine der Verriegelungsöffnungen (243) eingreift, so dass **durch** Antreiben des Antriebsglieds (210) das der Verriegelungsöffnung (243) zugeordnete Abtriebsrad (222) über das Antriebsglied (210) angetrieben wird.

14. Mobilfunkantenne (1) nach Anspruch 12 oder 13, **dadurch gekennzeichnet, dass** die Multi-Strahlformeinrichtung (200) zumindest eine feststehende Abrolleinrichtung (260) umfasst, die zwischen den Abtriebswellen (221) angeordnet ist, so dass bei einem Antreiben des Antriebsglieds (210) bei nicht arretierter Schwenkeinrichtung (240) das Umlenkrad (210) mit der Abrolleinrichtung (260) so in Kontakt bringbar ist, dass sich das durch das Antriebsglied (210) angetriebene Umlenkrad (210) über die Abrolleinrichtung (260) abrollt, und bei arretierter Schwenkeinrichtung (240) das Umlenkrad (210) nicht mit der Abrolleinrichtung (260) in Kontakt steht.

15. Mobilfunkantenne (1) nach Anspruch 7 oder 9, **dadurch gekennzeichnet, dass** die Multi-Strahlformeinrichtung (200) zumindest eine feststehende Abrolleinrichtung (260) umfasst, die zwischen den Abtriebswellen (221) angeordnet ist, so dass bei einem Antreiben des Antriebsglieds (210) dieses mit der Abrolleinrichtung (260) so in Kontakt bringbar ist, dass sich das Antriebsglied (210) über die Abrolleinrichtung (260) abrollt.

16. Mobilfunkantenne (1) nach einem der vorangehenden Ansprüche, **dadurch gekennzeichnet, dass** das Antriebsglied (110, 210) und/oder das Umschaltrad (131, 231) und die Abtriebsräder (122, 222) Zahnräder sind.

17. Mobilfunkantenne (1) nach Anspruch 15, **dadurch gekennzeichnet, dass** die einzelnen Zähne des Antriebsglieds (110, 210) und/oder des Umschaltrads (131, 231) und der Abtriebsräder (122, 222) beidseitig Fasen (F3, F4) gegenüber Zahnradstirnflächen aufweisen.

18. Mobilfunkantenne (1) nach Anspruch 17, **dadurch gekennzeichnet, dass** ferner die einzelnen Zahnstirnseiten der Zähne des Umschaltrads (131) und der Abtriebsräder (122) beidseitig Fasen (F1, F2) aufweisen.

19. Mobilfunkantenne (1) nach einem der vorangehenden Ansprüche, **dadurch gekennzeichnet, dass** die Multi-Strahlformeinrichtung (100, 200) ferner zwei Aktuatoren umfasst, die dazu ausgebildet sind, zum einen das Antriebsglied (110, 210) und zum anderen ein Verstellantriebsglied (134) anzutreiben.

20. Mobilfunkantenne (1) nach einem der Ansprüche 1 bis 18, **dadurch gekennzeichnet, dass** die Multi-Strahlformeinrichtung (100, 200) ferner einen Aktuator und eine Kupplung umfasst, die dazu ausgebildet sind, dass der Aktuator mit dem Antriebsglied (110) oder mit einem Verstellantriebsglied (134) in Wirkverbindung steht.

21. Mobilfunkantenne (1) nach Anspruch 19 oder 20, **dadurch gekennzeichnet, dass** die Multi-Strahlformeinrichtung (100, 200) ferner eine Elektronikeinheit umfasst, die eine Antriebsschnittstelle und eine Umschaltschnittstelle umfasst, wobei die Antriebsschnittstelle dazu ausgebildet ist, Antriebsbefehle an den Aktuator / die Aktuatoren zu übertragen, und wobei die Umschaltschnittstelle dazu ausgebildet ist, Umschaltbefehle an die Umschalteinrichtung zu übertragen.

## Claims

1. Mobile communications antenna (1) comprising a multi-beam-shaping means (100, 200), the multi-beam-shaping means (100, 200) comprising the following:
- a drivable drive member (110,210) comprising a drive shaft (111);
- at least two outputs, which each comprise a driven shaft (121, 221) substantially parallel to the drive shaft (111) and each comprise at least one driven wheel (122, 222) which is rotationally engaged with the drive shaft (121, 221);
- a number of drive connections (10) which corresponds to the number of outputs;
- at least two phase shifters (20), which are each in an operative connection with one of the outputs via a respective drive connection (10), in such a way that the phase shifters (20) can be adjusted by means of the outputs which are in an operative connection therewith, **characterised by** the following features:
- the respective axial positions of the driven wheels (122, 222) are fixed relative to the drive member (110, 210);
- the multi-beam-shaping means (100, 200) further comprises a switching means, by means of which the drive member (110, 210) can be brought selectively into an operative connection with different driven wheels (122, 222); and
- the multi-beam-shaping means (100, 200) is configured in such a way that the driven wheel (122, 222) which is in an operative connection with the drive member (110, 210) is always driven by driving the drive member (110, 210), a change in direction of rotation of the drive member (110, 210) causing a change in direction of rotation of the driven wheel (122, 222) which is in an operative connection therewith.

2. Mobile communications antenna (1) according to claim 1, **characterised by** the following features:
- the switching means comprises a switching wheel (131), which is rotationally engaged with the drive member (110) and the drive shaft (111) and is displaceable on the drive shaft (111);
- the switching wheel (131) can be displaced in translation on the drive shaft (111) by means of the switching means, in such a way that the drive member (110) can be brought into an operative connection with either of the two driven wheels (122).

3. Mobile communications antenna (1) according to claim 2, **characterised in that**:
- the drive shaft (111) is of a cross-sectional shape which is not rotationally symmetrical in the region remote from the drive member (110);
- the switching wheel (131) comprises in the centre a switching wheel opening (132), which corresponds to the cross-sectional shape of the drive shaft (111), such that the switching wheel (131) is rotationally engaged with the drive shaft (111), but is displaceable along the longitudinal extent of the drive shaft (111).

4. Mobile communications antenna (1) according to either claim 2 or claim 3, **characterised in that** the switching means comprises
- an adjustment drive member (134),
- an adjustment means (135) which is in an operative connection with the adjustment drive member (134),
- and a slider (136) which cooperates with the adjustment means (135) and on one end of which the switching wheel (131) is arranged rotatably with respect to the slider (136),
the switching means being configured in such a way that it is possible to bring about a translational displacement of the slider (136) and thus of the switching wheel (131) by way of actuation of the adjustment drive member (134).

5. Mobile communications antenna (1) according to claim 4, **characterised in that**:
- the adjustment means (135) is configured as a threaded spindle (135);
- the slider (136) comprises a through-opening (137) having an internal thread,
- the threaded spindle (135) is received in the through-hole (137) of the slider (136), and the slider (136) is fastened in such a way that it is not entrained in rotation when the threaded spindle (135) rotates, in such a way that a rotational movement of the threaded spindle (135) is converted into a translational movement of the slider (136).

6. Mobile communications antenna (1) according to any one of the preceding claims, **characterised in that**:
- in an end-face projection, the driven shafts (121) are arranged on a circle segment about the drive shaft (111) as a circle centre; and
- at least two of the outputs each further comprise at least one second wheel (123), which is rotationally engaged with the respective driven shaft (121) in such a way that at least two of the second wheels (123) are arranged in one or more planes, in such a way that the switching wheel (131) can be brought into an operative connection with at least two of the second wheels (123) simultaneously.

7. Mobile communications antenna (1) according to claim 1, **characterised by** the following features:
- the switching means comprises a switching wheel (231) which is in an operative connection with the drive member (210);
- by means of the switching means, the switching wheel (231) can be moved in such a way that the drive member (210) can be brought into an operative connection with one of the two driven wheels (222) via the switching wheel (231).

8. Mobile communications antenna (1) according to claim 7, **characterised in that** the switching wheel (231), together with a switching axle on which the switching wheel (231) is mounted, is radially pivotable about the drive shaft (221) as a pivot centre.

9. Mobile communications antenna (1) according to any one of the preceding claims, **characterised in that**, in an end-face projection, the driven shafts (121, 221) are arranged on a circle segment about a circle centre.

10. Mobile communications antenna (1) according to claim 9, **characterised in that** the drive shaft (111) or a pivot centre of the drive member (210) is in the circle centre.

11. Mobile communications antenna (1) according to any one of the preceding claims, **characterised in that** the switching means further comprises an indicator means (139), which is formed so as to indicate which of the driven wheels (122, 222) the drive member (110, 210) is in an operative connection with.

12. Mobile communications antenna (1) according to any one of claims 7 to 11, **characterised in that**:
- the switching means comprises a pivot means (240);
- the pivot means (240) and the drive member (210) are rotatably mounted at a circle centre of a circle segment on which the driven shafts (221) are arranged;
- the switching wheel (231) is rotatably mounted on the pivot means (240) in such a way that the switching wheel (231) cooperates with the drive member (210);
- the pivot means (240) comprises an arresting means (243), by means of which the pivot means (240) can be arrested, in such a way that, when the pivot means (240) is arrested, one of the driven wheels (222) is driven via the drive member (210) by driving the drive member (210).

13. Mobile communications antenna (1) according to claim 12, **characterised in that**:
- the arresting means (243) is in the form of at least two locking openings (243) in the pivot means (240), each locking opening (243) being assigned to one of the driven wheels (222);
- the multi-beam-shaping means (200) further comprises a locking bolt (250), which can take on a freewheeling position (F) and a locking position (V);
- the multi-beam-shaping means (200) is configured in such a way that, in the freewheeling position (F), the locking bolt (250) does not engage in any of the locking openings (243), in such a way that, by driving the drive member (210), the pivot means (240) rotates about the first fastening means (241) and the switching wheel (231) is pivoted about the first fastening means (241) as a pivot centre;
- the multi-beam-shaping means (200) is configured in such a way that, in the locking position (V), the locking bolt (250) engages in one of the locking openings (243), in such a way that, by driving the drive member (210), the driven wheel (222) assigned to the locking opening (243) is driven via the drive member (210).

14. Mobile communications antenna (1) according to either claim 12 or claim 13, **characterised in that** the multi-beam-shaping means (200) comprises at least one fixed rolling means (260), which is arranged between the driven shafts (221) in such a way that, when the drive member (210) is driven, when the pivot means (240) is not arrested, the deflection wheel (210) can be brought into contact with the rolling means (260) in such a way that the deflection wheel (210) which is driven by the drive member (210) rolls via the rolling means (260), and when the pivot means (240) is arrested, the deflection wheel (210) is not in contact with the rolling means (260).

15. Mobile communications antenna (1) according to either claim 7 or claim 9, **characterised in that** the multi-beam-shaping means (200) comprises at least one fixed rolling means (260), which is arranged between the driven shafts (221) in such a way that, when the drive member (210) is driven, it can be brought into contact with the rolling means (260) in such a way that the drive member (210) rolls via the rolling means (260).

16. Mobile communications antenna (1) according to any one of the preceding claims, **characterised in that** the drive member (110, 210) and/or the switching wheel (131, 231) and the drive wheels (122, 222) are gear wheels.

17. Mobile communications antenna (1) according to claim 15, **characterised in that** the individual teeth of the drive member (110, 210) and/or of the switching wheel (131, 231) and drive wheels (122, 222) comprise chamfers (F3, F4) on both sides with respect to gear wheel end faces.

18. Mobile communications antenna (1) according to claim 17, **characterised in that** the individual tooth end faces of the teeth of the switching wheel (131) and the drive wheels (122) further comprise chamfers (F1, F2) on both sides.

19. Mobile communications antenna (1) according to any one of the preceding claims, **characterised in that** the multi-beam-shaping means (100, 200) further comprises two actuators, which are formed so as to drive the drive member (110, 210) on the one hand and an adjustment drive member (134) on the other hand.

20. Mobile communications antenna (1) according to any one of claims 1 to 18, **characterised in that** the multi-beam-shaping means (100, 200) further comprises an actuator and a coupling, which are formed with the purpose whereby the actuator is in an operative connection with the drive member (110) or with an adjustment drive member (134).

21. Mobile communications antenna (1) according to either claim 19 or claim 20, **characterised in that** the multi-beam-shaping means (100, 200) further comprises an electronics unit, which comprises a drive interface and a switching interface, the drive interface being formed so as to transmit drive commands to the actuator(s), and the switching interface being formed so as to transmit switching commands to the switching means.

## Revendications

1. Antenne de radiotéléphonie mobile (1) comprenant un système de formation de faisceaux multiples (100, 200), ledit système de formation de faisceaux multiples (100, 200) comprenant les éléments suivants :
- un organe d'entraînement (110, 210) susceptible d'être entraîné, avec un arbre d'entraînement (111) ;
- au moins deux organes menés qui incluent respectivement un arbre mené (121, 221) sensiblement parallèle à l'arbre d'entraînement (111) et qui incluent respectivement au moins une roue menée (122, 222) reliée solidairement en rotation à l'arbre mené (121, 221) ;
- un nombre de liaisons d'entraînement (10) correspondant au nombre des organes menés ;
- au moins deux déphaseurs (20) dont chacun est en liaison d'action avec respectivement un des organes menés via l'une des liaisons d'entraînement (10) respectives, de sorte que les déphaseurs (20) sont réglables au moyen des organes menés reliés en liaison d'action avec ceux-ci,
**caractérisée par** les caractéristiques suivantes :
- les positions axiales respectives des roues menées (122, 222) sont invariables par rapport à l'organe d'entraînement (110, 210) ;
- le système de formation de faisceaux multiples (100, 200) inclut en outre un système d'inversion au moyen duquel l'organe d'entraînement (110 à 210) est susceptible d'être amené en liaison d'action de façon sélective avec des roues menées différentes (122, 222) ; et
- le système de formation de faisceaux multiples (100, 200) est réalisé pour que la roue menée (122, 222) qui se trouve en liaison d'action avec l'organe d'entraînement (110, 210) soit toujours entraînée, et une inversion du sens de rotation de l'organe d'entraînement (110, 210) provoque une inversion du sens de rotation de la roue menée (122, 222) reliée en liaison d'action avec celui-ci.

2. Antenne de radiotéléphonie mobile (1) selon la revendication 1, **caractérisée par** les caractéristiques suivantes :
- le système d'inversion inclut une roue d'inversion (131) qui est reliée solidairement en rotation avec l'organe d'entraînement (110) et avec l'arbre d'entraînement (111), et qui est déplaçable sur l'arbre d'entraînement (111) ;
- au moyen du système d'inversion, la roue d'inversion (131) est déplaçable en translation sur l'arbre d'entraînement (111), de telle façon que l'organe d'entraînement (110) peut être amené en liaison d'action avec différentes roues menées (122) des deux roues menées.

3. Antenne de radiotéléphonie mobile (1) selon la revendication 3, **caractérisée en ce que** :
- l'arbre d'entraînement (111) présente dans la région éloignée de l'organe d'entraînement (110) une forme de section transversale qui n'est pas à symétrie circulaire ;
- la roue d'inversion (131) comporte au milieu une ouverture (132) pour roue d'inversion correspondant à la forme de section transversale de l'arbre d'entraînement (111), la roue d'inversion (131) est reliée solidairement en rotation avec l'arbre d'entraînement (111), et est déplaçable le long de l'extension longitudinale de l'arbre d'entraînement (111).

4. Antenne de radiotéléphonie mobile (1) selon l'une des revendications 2 ou 3, **caractérisée en ce que** le système d'inversion comprend :
- un organe d'entraînement de réglage (134), un moyen de réglage (135) en liaison d'action avec l'organe d'entraînement de réglage (134),
- et un coulisseau (136) qui coopère avec le système de réglage (135) et à l'une des extrémités duquel est agencée la roue d'inversion avec possibilité de rotation par rapport au coulisseau (136),
dans laquelle le système d'inversion est réalisé de telle façon que par actionnement de l'organe d'entraînement de réglage (134), il est possible de provoquer un déplacement en translation du coulisseau (136) et ainsi de la roue d'inversion (131).

5. Antenne de radiotéléphonie mobile (1) selon la revendication 4, **caractérisée en ce que** :
- le système de réglage (135) est conçu sous la forme d'une broche filetée (135) ;
- le coulisseau (136) comporte une ouverture traversante (137) avec un taraudage,
- la broche filetée (135) est reçue dans le perçage traversant (137) du coulisseau (136), et le coulisseau (136) est fixé de telle façon que celui-ci ne tourne pas conjointement lors d'une rotation de la broche filetée, de sorte qu'un mouvement de rotation de la broche filetée (135) est converti en un mouvement de translation du coulisseau (136).

6. Antenne de radiotéléphonie mobile (1) selon l'une des revendications précédentes, **caractérisée en ce que** :
- les arbres menés (121) sont agencés, en projection frontale, sur un secteur circulaire autour de l'arbre d'entraînement (111) à titre de centre du cercle ; et
- au moins deux des organes menés incluent en outre chacun au moins une seconde roue (123) qui est reliée solidairement en rotation avec l'arbre mené respectif (121) de telle façon qu'au moins deux des secondes roues (123) sont agencées dans un ou plusieurs plans, de sorte que l'organe d'inversion (131) peut être amené en liaison d'action simultanément avec au moins deux des secondes roues (123).

7. Antenne de radiotéléphonie mobile (1) selon la revendication 1, **caractérisée par** les caractéristiques suivantes :
- le système d'inversion inclut une roue d'inversion (231) qui est en liaison d'action avec l'organe d'entraînement (210) ;
- au moyen du système d'inversion la roue d'inversion (231) est déplaçable de telle façon que l'organe entraînement (210) peut être amené en liaison d'action via la roue d'inversion (231) avec l'une des deux roues menées (222).

8. Antenne de radiotéléphonie mobile (1) selon la revendication 7, **caractérisée en ce que** la roue d'inversion (231), y compris un axe de roue d'inversion, sur lequel est montée la roue d'inversion (231), sont capables de pivoter radialement autour de l'arbre d'entraînement (221) à titre de centre de pivotement.

9. Antenne de radiotéléphonie mobile (1) selon l'une des revendications précédentes, **caractérisée en ce que**, en projection frontale sur un secteur circulaire, les arbres menés (121, 221) sont agencés autour d'un centre de cercle.

10. Antenne de radiotéléphonie mobile (1) selon la revendication 9, **caractérisée en ce que** l'arbre d'entraînement (111) ou un centre de pivotement de l'organe d'entraînement (210) se trouve au centre du cercle.

11. Antenne de radiotéléphonie mobile (1) selon l'une des revendications précédentes, **caractérisée en ce que** le système d'inversion inclut en outre un moyen un indicateur (139) qui est réalisé pour indiquer avec laquelle des roues menées (122, 222) l'organe d'entraînement (110, 210) est en liaison d'action.

12. Antenne de radiotéléphonie mobile (1) selon l'une des revendications 7 à 11, **caractérisée en ce que** :
- le système d'inversion inclut un système de pivotement (240) ;
- le système de pivotement (240) et l'organe d'entraînement (210) sont montés en rotation à un centre d'un secteur circulaire sur lequel sont agencés les arbres menés (221) ;
- la roue d'inversion (231) est montée en rotation sur le système de pivotement (240) de telle façon que la roue d'inversion (231) coopère avec l'organe d'entraînement (210) ;
- le système de pivotement (240) inclut un moyen d'arrêt (243) à l'aide duquel le système de pivotement (240) peut être arrêté, de sorte que lorsque le système de pivotement (240) est arrêté, l'une des roues menées (222) est entraînée via l'organe d'entraînement (210) par entraînement de l'organe d'entraînement (210).

13. Antenne de radiotéléphonie mobile (1) selon la revendication 12, **caractérisée en ce que** :
- le moyen d'arrêt (243) est conçu sous la forme d'au moins deux ouvertures de verrouillage (243) dans le système de pivotement (240), l'une des roues menées (222) étant associée à chaque ouverture de verrouillage (243) ;
- le système de formation de faisceaux multiples (200) inclut en outre un goujon de verrouillage (250), qui peut occuper une position de libération (F) et une position de verrouillage (V) ;
- le système de formation de faisceaux multiples (200) est réalisé pour que, dans la position de libération (F), le goujon de verrouillage (250) ne s'engage dans aucune des ouvertures de verrouillage (243), de sorte que le système de pivotement (240) tourne autour du premier système de fixation (241) par entraînement de l'organe entraînement (210), et la roue d'inversion (131) est pivotée autour du premier système de fixation (241) à titre de centre de pivotement ;
- le système de formation de faisceaux multiples (200) est réalisé pour que, dans la position de verrouillage (V), le goujon de verrouillage (250) s'engage dans l'une des ouvertures de verrouillage (243), de sorte que la roue menée (222) associée à l'ouverture de verrouillage (243) est entraînée via l'organe entraînement (210) par entraînement de l'organe entraînement (210).

14. Antenne de radiotéléphonie mobile (1) selon la revendication 12 ou 13, **caractérisée en ce que** le système de formation de faisceaux multiples (200) inclut au moins un système de déroulement stationnaire (260) qui est agencé entre les arbres menés (221), de sorte que lors d'un entraînement de l'organe entraînement (210) alors que le système de pivotement (240) n'est pas arrêté, la roue d'inversion (210) peut être amenée en contact avec le système de déroulement (260) de telle façon que la roue d'inversion (210) entraînée par l'organe d'entraînement (210) roule via le système de déroulement (260) et, lorsque le système de pivotement (240) est arrêté, la roue d'inversion (210) n'est pas en contact avec le système de déroulement (260).

15. Antenne de radiotéléphonie mobile (1) selon la revendication 7 ou 9, **caractérisée en ce que** le système de formation de faisceaux multiples (200) inclut au moins un système de déroulement stationnaire (260) qui est agencé entre les arbres menés (221) de telle façon que lors d'un entraînement de l'organe entraînement (210) celui-ci peut être amené en contact avec le système de déroulement (260) de telle façon que l'organe d'entraînement (210) roule via le système de déroulement (260).

16. Antenne de radiotéléphonie mobile (1) selon l'une des revendications précédentes, **caractérisée en ce que** l'organe entraînement (110, 210) et/ou la roue d'inversion (131, 231) et les roues menées (122, 222) sont des roues dentées.

17. Antenne de radiotéléphonie mobile (1) selon la revendication 15, **caractérisée en ce que** les dents individuelles de l'organe entraînement (110, 210) et/ou de la roue d'inversion (131, 231) et des roues menées (122, 222) présentent des chanfreins (F3, F4) sur les deux côtés à l'opposé de surfaces frontales des roues dentées.

18. Antenne de radiotéléphonie mobile (1) selon la revendication 17, **caractérisée en ce que** les côtés frontaux individuels des dents de la roue d'inversion (131) et des roues menées (122) comportent en outre des chanfreins (F1, F2) sur les deux côtés.

19. Antenne de radiotéléphonie mobile (1) selon l'une des revendications précédentes, **caractérisée en ce que** le système de formation de faisceaux multiples (100, 200) inclut en outre deux actionneurs qui sont réalisés pour entraîner d'une part l'organe d'entraînement (110, 210) et d'autre part un organe d'entraînement de réglage (134).

20. Antenne de radiotéléphonie mobile (1) selon l'une des revendications 1 à 18, **caractérisée en ce que** le système de formation de faisceaux multiples (100, 200) inclut en outre un actionneur et un accouplement, lesquels sont réalisés de telle manière que l'actionneur est en liaison d'action avec l'organe entraînement (110) ou avec un organe d'entraînement de réglage (134).

21. Antenne de radiotéléphonie mobile (1) selon la revendication 19 20, **caractérisée en ce que** le système de formation de faisceaux multiples (100, 200) inclut en outre une unité électronique qui inclut une interface d'entraînement et une interface d'inversion, dans laquelle l'interface d'entraînement est réalisée pour transmettre des ordres d'entraînement à l'actionneur ou aux actionneurs, et dans laquelle l'interface d'inversion est réalisée pour transmettre des ordres d'inversion au système d'inversion.
